# EUROPÄISCHE PATENTANMELDUNG

(11) **EP 4 379 876 A2**
(43) Veröffentlichungstag der Anmeldung: **05.06.2024**
(21) Anmeldenummer: 23211655.8
(22) Anmeldetag: 23.11.2023
(51) Int. Cl.: H01M 8/04082, C25B 1/04, H01M 8/0656, H01M 8/18

(54) **ENERGIESYSTEM**

(30) Priorität: 30.11.2022 DE 102022131680
(71) Anmelder: HPS Home Power Solutions AG, 12489 Berlin (DE)
(72) Erfinder: HIERL, Andreas, 12526 Berlin (DE)
(74) Vertreter: Müller, Thomas

(57) **Zusammenfassung**

Die vorliegende Erfindung betrifft ein modular aufgebautes Energiesystem zur Gestaltung eines aus Einzelkomponenten aufgebauten Gesamtsystems, insbesondere eines Gebäudeenergiesystems, wobei das Energiesystem als eine erste Komponente eine Kurzzeitspeichereinrichtung zur Speicherung elektrischer Energie aufweist, wobei das Energiesystem als eine zweite Komponente eine Langzeitspeichereinrichtung zur Speicherung von Wasserstoff aufweist, wobei das Energiesystem als eine dritte Komponente eine Brennstoffzelleneinrichtung aufweist, und wobei das Energiesystem als eine vierte Komponente eine Elektrolyseeinrichtung aufweist, die zur Erzeugung von Wasserstoff bereitgestellt ist. Um das Energiesystem an sich ändernde Gegebenheiten anpassen zu können, ist erfindungsgemäß realisiert, dass zumindest die Kurzzeitspeichereinrichtung modular aufgebaut ist und eine Anzahl von Energie-Speichermodulen aufweist, die über Verbindungsstellen individuell gestaltbar zu der Kurzzeitspeichereinrichtung zusammengesetzt oder zusammensetzbar sind, und dass die Langzeitspeichereinrichtung modular aufgebaut ist und eine Anzahl von Wasserstoff-Speichermodulen (aufweist, die über Verbindungsstellen individuell gestaltbar zu der Langzeitspeichereinrichtung zusammengesetzt oder zusammensetzbar sind.

## Beschreibung

Die vorliegende Erfindung betrifft ein modular aufgebautes Energiesystem gemäß dem Oberbegriff von Patentanspruch 1.

Energiesysteme der gattungsgemäßen Art sind im Stand der Technik bereits auf vielfältige Weise bekannt. Mit derartigen Systemen wird üblicherweise Energie für verschiedenste Anwendungsgebiete erzeugt und bereitgestellt.

Bei einer bekannten Art solcher Energiesysteme handelt es sich um ein Gebäudeenergiesystem, mittels dessen Energie in verschiedenen Formen für das Gebäude erzeugt und bereitgestellt wird. Bei einer aus dem allgemeinen Stand der Technik bekannten Ausführungsform wird in einer ersten Energiequelle Energie erzeugt. Bei der erzeugten Energie kann es sich beispielsweise um Wasserstoff handeln. Der Wasserstoff wird beispielsweise in einer Elektrolyseeinrichtung erzeugt und anschließend in einer Speichereinrichtung gespeichert. Während des Betriebs des Energiesystems wird der Wasserstoff aus der Speichereinrichtung ausgespeichert und in einem Brennstoffzellensystem verbraucht. Üblicherweise sind die vorbeschriebenen Komponenten des Energiesystems räumlich voneinander getrennt und über eine Verbindungsleitungseinrichtung miteinander verbunden.

Damit solche Energiesysteme möglichst umfassend, beispielsweise in Form von Gebäudeenergiesystemen, eingesetzt werden können, ist es im Stand der Technik bereits bekannt geworden, ein wie vorstehend beschriebenes Energiesystem um eine Lüftungseinrichtung zu erweitern. Die Lüftungseinrichtung hat insbesondere die Funktion, in einem Raum eines Gebäudes ein gewünschtes Raumklima zu erzeugen, beispielsweise indem der Raum entsprechend belüftet und/oder geheizt und/oder gekühlt wird. Die Lüftungseinrichtung kann im Betrieb auf Prozesse des Energiesystems zurückgreifen. Eine solche bekannte Lüftungseinrichtung ist beispielsweise in der DE 10 2018 133 194 A1 der Anmelderin offenbart. Bei dieser bekannten Lösung tritt ein über eine Außenluftzufuhr bereitgestellter Zuluftstrom in die Lüftungseinrichtung ein. Über einen Wärmetauscher wird eine Zuluftzufuhr erzeugt und dem Raum als Zuluft bereitgestellt. Aus dem Raum abgeführte Abluft wird über eine Abluftabfuhr als Abluftstrom über den Wärmetauscher geführt und als Fortluftstrom über eine Fortluftabfuhr aus der Lüftungseinrichtung abgeführt.

Bei derartigen Energiesystemen und Lüftungseinrichtungen handelt es sich um kompakte Systeme, in denen die einzelnen Komponenten effizient genutzt werden. Durch eine Mehrfachnutzung einzelner Komponenten in verschiedenen Prozessen oder für verschiedene Prozesse können zudem Herstellungskosten des Systems reduziert werden. Auch können an einzelnen Stellen des Systems entstehende Prozessresultate, die ansonsten als "Abfallprodukte" behandelt würden, in manchen Fällen noch für an anderen Stellen des Systems ablaufende Prozesse als "Ausgangsprodukte" beziehungsweise "Prozessprodukte" genutzt werden. Zu denken ist hier beispielsweise an entstehende Luftströme, Wärme und dergleichen.

So kann beispielsweise die in der Lüftungseinrichtung entstehende Abluft auch als Zuluft für das Brennstoffzellensystem verwendet werden.

Bei dem Ausbau der regenerativen Energien zeichnet sich zunehmend eine stärkere Elektrifizierung ab, beispielsweise auf den Sektoren Mobilität und auch im Bereich der Wärme. Dies erfordert eine Flexibilität des Energiesystems, damit sich dieses an sich ändernde Gegebenheiten anpassen kann.

Um gattungsgemäße Energiesysteme an sich ändernde Anforderungen und Gegebenheiten leicht anpassen zu können, und um gattungsgemäße Energiesysteme bei Bedarf auch um weitere Komponenten, insbesondere solche, für die eine Luftzufuhr und/oder eine Wärmezufuhr vorteilhaft ist, erweitern zu können, liegt der vorliegenden Erfindung die Aufgabe zugrunde, ein Energiesystem der eingangs genannten Art derart weiterzubilden, dass eine solche Anpassung an sich ändernde Gegebenheiten und Voraussetzungen auf einfache Weise erfolgen kann.

Diese Aufgabe wird erfindungsgemäß gelöst durch das Energiesystem mit den Merkmalen des unabhängigen Patentanspruchs 1, welches den ersten Aspekt der Erfindung darstellt, sowie durch das Verfahren zum Konfigurieren eines solchen Energiesystems mit den Merkmalen des unabhängigen Patentanspruchs 14, welches den zweiten Aspekt der Erfindung darstellt.

Weitere Merkmale und Details der Erfindung ergeben sich aus den Unteransprüchen, aus der Beschreibung sowie aus den Zeichnungen. Dabei gelten Merkmale und Details, die im Zusammenhang mit dem Energiesystem offenbart sind, vollumfänglich auch im Zusammenhang mit dem Verfahren, und umgekehrt, so dass hinsichtlich der Offenbarung des einen Erfindungsaspekts stets vollinhaltlich auch Bezug auf den jeweils anderen Erfindungsaspekt genommen wird.

Allen Erfindungsaspekten liegt das gemeinsame erfinderische Konzept zugrunde, dass das Energiesystem modular aufgebaut ist, und dass sich diese Modularität dadurch auszeichnet, dass die einzelnen Komponenten des Energiesystems bedarfsgerecht an sich ändernde Gegebenheiten angepasst werden können. Die vorliegende Erfindung ermöglicht das Herstellen einer flexiblen, einfachen und nachhaltigen Lösung zur Nachrüstung und/oder Umrüstung und/oder Anpassung von Energiesystemen, insbesondere mit Wasserstoffbasierten Energiespeicherlösungen.

In bevorzugter Ausgestaltung betrifft die vorliegende Erfindung ein modulares, multihybrides nachhaltiges Speicherkonzept mit Kurzzeitspeichern und Langzeitspeichern auf Basis von Wasserstoff-Speichern und Batteriemodulen als flexible Kombinationseinheit. Dabei wird insbesondere durch eine gezielte Dimensionierung der Kurzzeitspeicher und der der Langzeitspeicher erreicht. Ein Kernmerkmal der vorliegenden Erfindung beruht alleine auf der modularen Kombination von Kurzzeit- und Langzeitspeicher. Die flexible Kombination bringt den essentiellen Vorteil. Da sich in realen Anwendungen bei weiterer Elektrifizierung, vor allem durch Substitution der Verbrennungstechnik von fossilen Rohstoffen, durch Wärmepumpen und Elektromobilität, mit hoher Wahrscheinlichkeit die Anforderung der Endkunden, insbesondere auch bei einem bereits installierten Basissystem dieser Art, verändern werden, kann ein modulares multihybrides Gesamtkonzept einen Bedarf in Zukunft und/oder einen Vorteil darstellen. Dies wird durch Vergrößern/Verkleinern der einzelnen Komponenten des Energiesystems erreicht, beispielsweise der Kurzzeitspeicher und der Langzeitspeicher.

Die vorliegende Erfindung macht es möglich, dass das Multihybride Speichersystem flexibel mit stark reduzierten Aufwand, auch bei einem bereits bestehenden Basissystem dieser Art, angepasst und vergrößert werden kann. Dabei ist auch eine Multi-Multihybridkombination mit eingeschlossen. Dies bedeutet in einer bevorzugten Ausführungsform, dass sich neben den Wasserstoff-Speichermodulen auch Druck-Bündelanlagen oder ähnliche Wasserstoffspeicher im Energiesystem befinden können.

Ein Kernmerkmal der vorliegenden Erfindung besteht folglich darin, dass das erfindungsgemäße Energiesystem in Form eines modularen Konzepts ausgebildet ist, bestehend aus einzelnen Komponenten, die beispielsweise wiederum einzelne Module aufweisen.

Ein Modul im Lichte der vorliegenden Erfindung ist insbesondere eine austauschbare, meist komplexe Komponente innerhalb eines Gesamtsystems, welches eine geschlossene Funktionseinheit bildet. Der modulare Aufbau des Energiesystems besagt insbesondere, dass das Energiesystem in einzelne Komponenten aufgeteilt ist, die für sich genommen schon Module des Energiesystems darstellen können. In gleicher Weise können auch einzelne Komponenten des Energiesystems modular aufgebaut sein und ebenfalls einzelne Module aufweisen. Ein modularer Aufbau bedeutet insbesondere einen Aufbau nach dem Baukastenprinzip. Vorteil hierbei ist, dass alte oder defekte Module gegen neue Module ausgetauscht werden können, oder das neue Module zum Ganzen hinzugefügt werden können, oder dass Module aus dem Ganzen entfernt werden können.

Gemäß der vorliegenden Erfindung ist das Energiesystem modulartig aufgebaut, das heißt, es weist einzelne Module auf. Ein modulartiger Aufbau bewirkt, dass die einzelnen Module, die jeweils Komponenten des Gesamtsystems bilden, zum Gesamtsystem zusammengesetzt werden, wobei das Zusammensetzen der einzelnen Module vorzugsweise mittels geeigneter Schnittstellen erfolgt. Eine Schnittstelle zeichnet sich insbesondere dadurch aus, dass darüber die einzelnen Komponenten in Verbindung stehen. Im Zusammenhang mit der vorliegenden Erfindung kommen verschiedene Typen von Schnittstellen zum Einsatz, beispielsweise Schnittstellen zu einem Kommunikationsaustausch, über die insbesondere Daten und Signale übertragen werden, aber auch Schnittstellen zu einem Stoffaustausch. Eine Schnittstelle ist folglich insbesondere eine Einrichtung, über die ein Modul mit einem anderen Modul interagiert.

Durch die Verwendung derartiger Module kann das Gesamtsystem leicht an sich ändernde Gegebenheiten und Voraussetzungen angepasst werden, indem beispielsweise die Anzahl einzelner Module vergrößert oder verkleinert wird.

Gemäß dem ersten Aspekt der Erfindung wird ein Energiesystem bereitgestellt, welches die Merkmale des unabhängigen Patentanspruchs 1 aufweist. Hierbei handelt es sich um ein modular aufgebautes Energiesystem zur Gestaltung eines aus Einzelkomponenten aufgebauten Gesamtsystems, insbesondere eines Gebäudeenergiesystems. Das Energiesystem weist eine Reihe von Komponenten auf, die für sich genommen bereits Module des Energiesystems darstellen oder darstellen können.

Als eine erste Komponente weist das Energiesystem eine Kurzzeitspeichereinrichtung zur Speicherung elektrischer Energie auf. Bei der Kurzzeitspeichereinrichtung handelt es sich insbesondere um einen Zwischenspeicher, in dem erzeugte elektrische Energie, die beispielsweise durch eine Photovoltaikanlage, eine Windkraftanlage oder eine andere regenerative Energiequelle erzeugt wurde, zwischengespeichert wird. In einem Energiesystem haben Kurzzeitspeicher oft mehrere hundert Zyklen im Jahr und sind in ökologischer Weise genauso ausgelegt. Bei Photovoltaik-Anwendungen zeichnet sich ihre ideale nutzbare Kapazität dadurch aus, dass diese ungefähr den mittleren Bedarf in der Dunkelflaute (Nachstrombedarf) aufzeigt. Liegt ein Interesse oder Bedarf vor, dass mehr als ein paar Stunden Energie zwischenzuspeichern ist, dann kann dies nur in begrenztem Maße, also durch Überdimensionierung erfolgen, Ursachen stellen dabei die Ökonomie, also der unwirtschaftliche Betrieb oder auch das Gewicht und Volumen von Kurzzeitspeichern dar.

Erfindungsgemäß ist die Kurzzeitspeichereinrichtung modular aufgebaut und weist eine Anzahl von N Energie-Speichermodulen auf, die über Verbindungsstellen individuell gestaltbar zu der Kurzzeitspeichereinrichtung zusammengesetzt oder zusammensetzbar sind. Das bedeutet, dass die Kurzzeitspeichereinrichtung hinsichtlich der Menge an Energie-Speichermodulen variabel ausgebildet ist, das heißt eine veränderliche Anzahl von Energie-Speichermodulen, mindestens jedoch ein Energie-Speichermodul, aufweist. Beispiele hierzu werden im weiteren Verlauf der Beschreibung erläutert. Bei dem Energie-Speichermodul handelt es sich um ein Bauelement, in dem erzeugte elektrische Energie gespeichert, insbesondere zwischengespeichert wird. "N" stellt eine beliebige natürliche Zahl dar. Das bedeutet, die Kurzzeitspeichereinrichtung weist wenigstens ein Energie-Speichermodul auf, vorzugsweise aber zwei oder mehr Energie-Speichermodule. Die erforderliche oder geeignete Anzahl ergibt ich insbesondere nach Einsatz, Art und Umfang des Energiesystems. Das erfindungsgemäß modular aufgebaute Energiesystem sieht vor, dass beliebig viele Energie-Speichermodule bestimmungsgemäß zu der Kurzzeitspeichereinrichtung hinzugefügt, aber auch aus dieser entfernt werden, können, beispielsweise wenn sich die, insbesondere äußeren Gegebenheiten, ändern.

Die vorliegende Erfindung ist nicht auf bestimmte Typen von Kurzzeitspeichereinrichtungen beschränkt. Bevorzugt weist jedes Energie-Speichermodul der Kurzzeitspeichereinrichtung eine Anzahl von elektrochemischen Zellen, insbesondere von Batteriezellen auf, die insbesondere in einem Gehäuse des Energie-Speichermoduls angeordnet sind. Bei dem Energie-Speichermodul handelt es sich dann um ein Batteriemodul, bei der Kurzzeitspeichereinrichtung um eine Batterieeinrichtung.

Als eine zweite Komponente weist das Energiesystem eine Langzeitspeichereinrichtung zur Speicherung von Wasserstoff auf. Im Energiesystem erzeugter Wasserstoff, oder Wasserstoff, der dem Energiesystem zur Verfügung gestellt wird, wird in der Langzeitspeichereinrichtung gespeichert. Erfindungsgemäß ist die Langzeitspeichereinrichtung modular aufgebaut und weist eine Anzahl von N Wasserstoff-Speichermodulen auf, die über Verbindungsstellen individuell gestaltbar zu der Langzeitspeichereinrichtung zusammengesetzt oder zusammensetzbar sind. Das bedeutet, dass die Langzeitspeichereinrichtung hinsichtlich der Menge an Wasserstoff-Speichermodulen variabel ausgebildet ist, das heißt eine veränderliche Anzahl von Wasserstoff-Speichermodulen, mindestens jedoch ein Wasserstoff-Speichermodul, aufweist. Beispiele hierzu werden im weiteren Verlauf der Beschreibung erläutert. "N" stellt auch hier eine beliebige natürliche Zahl dar. Das bedeutet, die Langzeitspeichereinrichtung weist wenigstens ein Wasserstoff-Speichermodul auf, vorzugsweise aber zwei oder mehr Wasserstoff-Speichermodule. Die erforderliche oder geeignete Anzahl ergibt ich insbesondere nach Einsatz, Art und Umfang des Energiesystems. Das erfindungsgemäß modular aufgebaute Energiesystem sieht vor, dass beliebig viele Wasserstoff-Speichermodule bestimmungsgemäß zu der Langzeitspeichereinrichtung hinzugefügt, aber auch aus dieser entfernt werden, können, beispielsweise wenn sich die, insbesondere äußeren, Gegebenheiten ändern. Zu Unterscheidungszwecken werden diese Wasserstoff-Speichermodule im Folgenden auch als erste Wasserstoff-Speichereinrichtungen bezeichnet.

Gemäß einer Ausführungsform ist wenigstens ein Wasserstoff-Speichermodul als Speicherbehälter ausgebildet. In einem solchen Speicherbehälter wird der Wasserstoff aufbewahrt. Die Erfindung ist nicht auf bestimmte Größen und Formen solcher Speicherbehälter beschränkt. Beispielsweise kann der Speicherbehälter als Druckbehälter ausgebildet sein.

Im einfachsten Fall ist der Speicherbehälter ohne jegliche weitere, die Speicherung fördernde Inhalte, ausgebildet.

Gemäß einer Ausführungsform ist wenigstens ein Wasserstoff-Speichermodul als Speicherbehälter mit einem darin befindlichen Speichermaterial ausgebildet. Das Speichermaterial ist vorzugsweise derart gewählt, dass die Speicherkapazität des Behälters erhöht wird. So kann bei einer festgelegten gewünschten Speicherkapazität der Speicherbehälter vom Volumen her beispielsweise verkleinert werden. Oder aber, wenn der Speicherbehälter eine vorgegebenes Volumen einhalten muss, kann durch das Speichermaterial die Speicherkapazität vergrößert werden. Wenn durch das Speichermaterial das Volumen des Speicherbehälters, bei gleicher Speicherkapazität, verkleinert werden kann, lassen sich auf diese Weise kleine Speichereinheiten bereitstellen, die dem Modulcharakter des Energiesystems Rechnung tragen, da sie je nach Bedarf mengenmäßig erweitert oder reduziert werden können.

Gemäß einer Ausführungsform ist das Speichermaterial derart bereitgestellt, dass es in der Lage ist, Wasserstoff zu binden oder einzulagern. Die Erfindung ist nicht auf bestimmte Arten von Speichermaterial beschränkt. Nachfolgend werden exemplarisch eine Reihe unterschiedlicher, geeigneter Speichermaterialien beschrieben, ohne dass die Erfindung auf diese konkreten Beispiele beschränkt ist.

Beispielsweise kann das Speichermaterial ein pulverförmiges Material oder ein poröses Material sein und/oder eine Gerüststruktur aufweisen.

Gemäß einer Ausführungsform ist wenigstens ein Wasserstoff-Speichermodul der Langzeitspeichereinrichtung als Hydridspeichereinrichtung, vorzugsweise als Metallhydridspeichereinrichtung, insbesondere als Niedertemperatur-Metallhydridspeichereinrichtung, ausgebildet. Derartige Speichereinrichtungen sind grundsätzlich im Stand der Technik bekannt und dem Fachmann geläufig. Vorzugsweise sind die Wasserstoff-Speichermodule als Druckbehälter ausgebildet sind, in dem Hydrid-Speichermasse eingefüllt ist.

Gemäß einer Ausführungsform handelt es sich bei den Speichermaterialien um Kohlenstoffmaterialien, beispielsweise Kohlenstoff-Nanomaterialien, beispielsweise in Form so genannter "Nano Fibres" oder "Nano-Tubes".

Gemäß einer Ausführungsform handelt es sich bei dem Speichermaterial um eine Metallorganische Gerüstverbindung, ein so genanntes " Metal Organic Framework - MOF". Metallorganische Gerüstverbindungen - MOFs - sind insbesondere hybride, kovalente Kristallstrukturen, die durch die Reaktion von organischen Molekülen mit Metall-Ionen entstehen. Durch ihre nanometrischen, miteinander verbundenen Hohlräume eignen sie sich in besonderer Weise zum Speichern von Ionen und Molekülen, beispielsweise von Wasserstoff.

Je nach Ausgestaltung kann das Speichermaterial auch anders ausgebildet sein, beispielsweise in Form von Zeolith.

Wenn die Langzeitspeichereinrichtung mehrere Wasserstoff-Speichermodule aufweist, können dies beispielsweise jeweils in gleicher Weise ausgebildet sein. Gemäß einer Ausführungsform können die Wasserstoff-Speichermodule im Vergleich zueinander aber auch unterschiedlich ausgebildet sein, beispielsweise als beliebige Kombination der vorstehend beschriebenen Wasserstoff-Speichermodule.

In bevorzugter Ausführung steht die Anzahl der Wasserstoff-Speichermodule in Beziehung zur Anzahl der Energie-Speichermodule.

Gemäß der vorliegenden Erfindung wurde dieses Prinzip für Kurzzeitenergiespeicher, um eine Langzeitenergiespeichermodularität erweitert. Dieser Langzeitenergiespeicher zeichnet sich beispielsweise dadurch aus, dass es sich um einen modularen, vorzugsweise noch handlichen Wasserstoffspeicher handelt. Ein Langzeitenergiespeicher zeichnet sich insbesondere dadurch aus, dass der Zeitpunkt der Einlagerung des Wasserstoffs und der Zeitpunkt der Wiederentnahme oft sehr viele Tage, Wochen oder gar Monate auseinanderliegen können, ohne dass dabei eine Selbstentladung, wie etwa bei Batteriespeichern, entsteht. Langzeitenergiespeicher sind hier eine relevante Lösung. Diese speichern, insbesondere auf Basis von Metallhydridspeichern, mit teilweise 10fach höheren volumetrischen Dichten gegenüber der marktüblichen Lithium-Ionen Technologie.

Die vorliegende Erfindung beruht gemäß einer Ausführungsform in der Kombinationsmöglichkeit im Zusammenspiel aus der Wahl/Dimensionierung der jeweiligen Kapazität für den Kurzzeitspeicherpfad auf Basis von vorzugsweise kobaltfreien Lithium-Eisen-Phosphat Technologie und vorzugsweise Niedertemperatur-Metallhydridspeichern und der bivalenten Modularität zur einfachen Optimierung für die jeweilige Endanwendung. Dies zeichnet sich dadurch aus, dass der Hydridspeicher für Innenaufstellung ein geeignetes Verbindungselement besitzt. Beispiele hierzu werden weiter unten erläutert. Seine typische Größe orientiert sich dabei an Gewicht des vorliegenden Kurzzeitspeichers, etwa des Batteriemoduls. Typische Gewichte sind hier zwischen 30 kg und 60 kg und in seltenen Fällen auch mal ca. 10kg oder ca. 80 kg je Speichereinheit.

Vorzugsweise weist die Langzeitspeichereinrichtung wenigstens eine Anordnung aus jeweils einer oder mehreren Hochdruckspeichereinrichtung(en) für Wasserstoff auf, wie sie auch in herkömmlichen Energiesystemen bereits zum Einsatz kommen. Zu Unterscheidungszwecken werden diese Hochdruckspeichereinrichtungen im Folgenden auch als zweite Speichereinrichtungen bezeichnet. Die Langzeitspeichereinrichtung kann hinsichtlich der Hochdruckspeichereinrichtungen bezüglich der Menge an Hochdruckspeichereinrichtungen variabel ausgebildet ist, das heißt eine veränderliche Anzahl von Hochdruckspeichereinrichtungen, mindestens jedoch eine Hochdruckspeichereinrichtung, aufweisen. Bei den Hochdruckspeichereinrichtung(en) handelt es sich ebenfalls um Speichermodule für Wasserstoff. Diese Hochdruckspeichereinrichtungen unterscheiden sich jedoch von den zuvor beschriebenen Wasserstoff-Speichermodulen. Derartige Hochdruckspeichereinrichtungen, das heißt zweite Speichereinrichtungen, sind in der Regel größer und schwerer als die zuvor genannten Wasserstoff-Speichermodule, das heißt erste Speichereinrichtungen, und können deshalb mehr Wasserstoff speichern. Zusätzlich werden derartige Hochdruckspeichereinrichtungen in der Regel mit einer Kompressoreinrichtung betrieben, wie auch im Zusammenhang mit der Figurenbeschreibung näher erläutert ist. Grundsätzlich ist es möglich, dass die Langzeitspeichereinrichtung eines oder mehrere Wasserstoff-Speichermodule, das heißt erste Speichereinrichtungen , der zuvor genannten Art, und eine oder mehrere Hochdruckspeichereinrichtung(en), das heißt zweite Speichereinrichtungen, der letztgenannten Art aufweist. Wenn die Speichermenge an zu speicherndem Wasserstoff deutlich erhöht werden soll, kann es sinnvoll sein, eine Langzeitspeichereinrichtung für Wasserstoff, die zunächst Wasserstoff-Speichermodule der weiter oben genannten Art aufweist, um Hochdruckspeichereinrichtungen der letztgenannten Art zu ergänzen, oder aber auszutauschen. Ebenso können, wenn die Speichermenge an zu speicherndem Wasserstoff deutlich verringert werden soll, und das Energiesystem, beispielsweise als bereits vorhandenes Bestandssystem mit entsprechenden Hochdruckspeichereinrichtungen ausgestattet ist, die Langzeitspeichereinrichtungen durch entsprechende Wasserstoff-Speichermodule, insbesondere in Form von Hydridspeichermodulen, ausgetauscht werden.

Gemäß einer Ausführungsform besteht die Langzeitspeichereinrichtung aus wenigstens einem Wasserstoff-Speichermodul, das heißt einer ersten Speichereinrichtung, bei der e s sich, im Vergleich zu einer Hochdruckspeichereinrichtung, um eine kleine beziehungsweise kleinere Speichereinrichtung handelt. Das Wasserstroff-Speichermodul kann beispielsweise einzeln, oder in Gruppen bereitgestellt, beispielsweise angeflanscht, werden. Gemäß einer Ausführungsform sind nur solche Wasserstoff-Speichermodule bereitgestellt. Gemäß einer Ausführungsform werden die Wasserstoff-Speichermodule in Kombination mit den Hochdruckspeichereinrichtungen bereitgestellt.

Als eine dritte Komponente weist das Energiesystem eine Brennstoffzelleneinrichtung auf. Bevorzugt ist die Brennstoffzelleeinrichtung modular aufgebaut ist und weist eine Anzahl von N Brennstoffzellenmodulen auf, die über Verbindungsstellen individuell gestaltbar zu der Brennstoffzelleneinrichtung zusammengesetzt oder zusammensetzbar sind. "N" stellt wiederum eine beliebige natürliche Zahl dar. Das bedeutet, dass die Brennstoffzelleneinrichtung hinsichtlich der Menge an Brennstoffzellenmodulen variabel ausgebildet ist, das heißt eine veränderliche Anzahl von Brennstoffzellenmodulen, mindestens jedoch ein Brennstoffzellenmodul, aufweist. Das bedeutet, die Brennstoffzelleneinrichtung weist wenigstens ein Brennstoffzellenmodul auf, kann aber auch zwei oder mehr Brennstoffzellenmodule aufweisen. Die erforderliche oder geeignete Anzahl ergibt ich insbesondere nach Einsatz, Art und Umfang des Energiesystems. Das erfindungsgemäß modular aufgebaute Energiesystem sieht vor, dass beliebig viele Brennstoffzellenmodule bestimmungsgemäß zu der Elektrolyseeinrichtung hinzugefügt, aber auch aus dieser entfernt werden, können, beispielsweise wenn sich die, insbesondere äußeren Gegebenheiten, ändern. In der Brennstoffzelleneirichtung wird der erzeugte und in der Langzeitspeichereinrichtung gespeicherte Wasserstoff in elektrische Energie umgewandelt. Zusätzlich kann die bei diesem Prozess entstehende Abwärme für weitere Zwecke, beispielsweise für eine Lüftungseinrichtung, eine Wärmepumpeneinrichtung, oder dergleichen genutzt werden. Jedes Brennstoffzellenmodul weist, neben anderen erforderlichen Komponenten, eine oder mehrere Brennstoffzellen, insbesondere einen Brennstoffzellenstapel, auf. Bei den Brennstoffzellen handelt es sich in einer bevorzugten Ausführungsform um luftgekühlte Brennstoffzellen, vorzugsweis mit offener Kathode. Der Einsatz anderer Brennstoffzellenausführungen ist ebenfalls realisierbar und in der Erfindung explizit mit eingeschlossen.

Als eine vierte Komponente weist das Energiesystem eine Elektrolyseeinrichtung auf, die zur Erzeugung von Wasserstoff bereitgestellt ist. Der in der Elektrolyseeinrichtung erzeugte Wasserstoff wird in der Langzeitspeichereinrichtung abgespeichert. Erfindungsgemäß ist die Elektrolyseeinrichtung modular aufgebaut und weist eine Anzahl von N Elektrolysemodulen auf, die über Verbindungsstellen individuell gestaltbar zu der Elektrolyseeinrichtung zusammengesetzt oder zusammensetzbar sind. "N" stellt eine beliebige natürliche Zahl dar. Das bedeutet, dass die Elektrolyseeinrichtung hinsichtlich der Menge an Elektrolysemodulen variabel ausgebildet ist, das heißt eine veränderliche Anzahl von Elektrolysemodulen, mindestens jedoch ein Elektrolysemodul, aufweist. Das bedeutet, die Elektrolyseeinrichtung weist wenigstens ein Elektrolysemodul auf, kann aber auch zwei oder mehr Elektrolysemodule aufweisen. Die erforderliche oder geeignete Anzahl ergibt ich insbesondere nach Einsatz, Art und Umfang des Energiesystems. Das erfindungsgemäß modular aufgebaute Energiesystem sieht vor, dass beliebig viele Elektrolysemodule bestimmungsgemäß zu der Elektrolyseeinrichtung hinzugefügt, aber auch aus dieser entfernt werden, können, beispielsweise wenn sich die, insbesondere äußeren, Gegebenheiten ändern.

Ein wie vorstehend beschriebenes erfindungsgemäßen Energiesystem, welches modulartig aufgebaut ist, kann auf einfache Weise, insbesondere durch Hinzufügen und/oder Entfernen einzelner Module, an sich verändernde Gegebenheiten angepasst werden, beispielsweise bei einer Veränderung der Verbräuche, bei einer Vergrößerung der den elektrischen Strom produzierenden Anlagen, beispielsweise einer PV-Anlage, einer Windkraftanlage oder einer anderen Anlage, bei einem sich ändernden Versorgungswunsch, etwa wenn eine Autarkie angestrebt wird, und dergleichen. Damit kann durch das erfindungsgemäße Energiesystem eine Nachhaltigkeit geschaffen werden. Mit dem Ausbau der regenerativen Energien und der Industrialisierung bei der Herstellung dieser Technik sind die Gestehungskosten und das daraus resultierende örtliche Überangebot an beispielsweise Sonnenstrom oder Windstrom attraktiv, um den auf diese Weise erzeugten elektrischen Strom zwischenzuspeichern und bedarfsgerecht wieder abzugeben. Dabei wird in Kurzzeitspeicherung und Langzeitspeicherung unterschieden. Kurzzeitspeicherung zeichnet sich hier vorzugsweise dadurch aus, dass die Überschussenergie meist für wenige Stunden zwischengespeichert wird und dann bedarfsgerecht, beispielsweise nachts, wenn keine Sonne scheint, wieder abgegeben werden kann. Die Langzeitspeicherung von Wasserstoff ermöglicht, dass dieser über sehr lange Zeiträume gespeichert werden kann, ohne dass es dabei zu Verlusten kommt.

Nachfolgend werden verschiedene vorteilhafte Weiterbildungen der einzelnen Komponenten des Energiesystems sowie des Energiesystems selbst beschrieben.

Vorzugsweise weist das Energiesystem einen Aufnahmeraum für die Kurzzeitspeichereinrichtung auf oder stellt einen solchen Aufnahmeraum bereit. Der Aufnahmeraum ist dabei insbesondere derjenige Platz, in welchem die Kurzzeitspeichereinrichtung mit ihren Energie-Speichermodulen im Energiesystem platziert, angeordnet oder montiert ist. Vorzugsweise ist der Aufnahmeraum als Schrankeinrichtung oder Gehäuseeinrichtung ausgebildet. Der Aufnahmeraum ist zur Aufnahme eines oder mehrere Energie-Speichermodule ausgebildet. Die Energie-Speichermodule sind bevorzugt lösbar in dem Aufnahmeraum angeordnet, vorzugsweise werkzeuglos, mittels einer Steckverbindung, mittels einer Aufsteckverbindung oder mittels einer Einschubverbindung. Die Erfindung ist nicht auf die genannten Beispiele beschränkt. So lassen sich auf einfache Weise Energie-Speichermodule hinzufügen, aber auch entfernen. Beispielsweise kann sich in dem Aufnahmeraum, beispielsweise in der Schrankeinrichtung, eine Regaleinrichtung befinden, in das die einzelnen Module eingeschoben werden/sind. In einer Ausführungsform sind die Energie-Speichermodule auf Tragelementen mit luftdurchlässigen Zwischenräumen, beispielsweise auf horizontalen Streben der Regaleinrichtung angeordnet und/oder befestigt, so dass ein Luft-Volumenstrom zu Kühlungszwecken in vertikaler Richtung entlang und durch alle Energie-Speichermodule strömen kann. In einer anderen Ausführung sind die einzelnen Module aufeinander gesteckt.

Vorzugsweise dient der Aufnahmeraum zur vertikalen Aufnahme von Energie-Speichermodulen übereinander und/oder zur horizontalen Anordnung von Energie-Speichermodulen nebeneinander, und ist entsprechend bereitgestellt.

Vorzugsweise sind die Energie-Speichermodule lösbar miteinander elektrisch gekoppelt oder verschaltet. Es können insbesondere elektrische Anschlüsse und/oder Verbindungseinrichtungen zur elektrischen Kopplung und Verschaltung der Module realisiert sein.

Vorzugsweise weist die Kurzzeitspeichereinrichtung ein Managementmodul auf, wobei das Managementmodul eine, insbesondere skalierbare, Leistungselektronik aufweist oder als eine solche Leistungselektronik ausgebildet ist, und wobei die Energie-Speichermodule lösbar mit dem Managementmodul elektrisch gekoppelt oder verschaltet sind.

Innerhalb der Kurzzeitspeichertechnik für regenerative Energien haben als Energie-Speichermodule Batteriemodule eine erhöhte Relevanz entwickelt. Dadurch ist bei gleichbleibendem Batterie-Managementsystem eine schnelle und einfache Möglichkeit gegeben, Module bei veränderten Anforderungen hinzuzufügen oder bei defekten Batteriemodulen einen einfachen und schnellen Wechsel zu realisieren. Aufstecklösungen oder Einschublösungen mit noch handhabbaren Gewichten der Module stellen eine attraktive Anwendung für die Anwender dar. Dadurch können im ausgeschalteten Zustand auch ohne Neuverkabelung Module leicht entfernt oder erweitertet werden.

In analoger Weise kann/können auch die Brennstoffzelleneinrichtung, und/oder die Elektrolyseeinrichtung, und/oder die Langzeitspeichereinrichtung, insbesondere die Wasserstoff-Speichermodule und/oder die Hochdruckspeichereinrichtungen in entsprechend ausgestalteten Aufnahmeräumen angeordnet sein. Hinsichtlich der Ausgestaltung und Funktion des Aufnahmeraums wird zur Vermeidung von Wiederholungen deshalb vollinhaltlich auf die Ausführungen zum Aufnahmeraum für die Kurzzeitspeichereinrichtung Bezug genommen und verwiesen.

Um auf einfache Weise eine modulartige Anpassung bei der Langzeitspeichereinrichtung zu realisieren, sind in einer bevorzugten Ausführungsform die Wasserstoff-Speichermodule, das heißt die ersten Speichereinrichtungen, und/oder die Hochdruckspeichereinrichtungen, das heißt die zweiten Speichereinrichtungen, lösbar mit einer Verbindungseinrichtung verbunden, welche insbesondere der Langzeitspeichereinrichtung zugeordnet ist. Die Verbindungseinrichtung weist einen oder mehrere Anschluss/Anschlüsse für die Wasserstoff-Speichermodule und/oder die Hochdruckspeichereinrichtungen auf, über die die gewünschte oder erforderliche Anzahl an Wasserstoff-Speichermodulen und/oder Hochdruckspeichereinrichtungen wahlweise und individuell an der Verbindungseinrichtung angeordnet werden können, von dieser aber auch entfernt werden können. Gemäß einer Ausführungsform gibt die Anzahl der Anschlüsse die Anzahl der maximal befestigbaren Wasserstoff-Speichermodule und/oder Hochdruckspeichereinrichtungen vor. Anschlüsse, an denen kein Wasserstoff-Speichermodul und/oder Hochdruckspeichermodul angeschlossen ist, sind über geeignete Verschlüsse verschlossen. Die Verbindungseinrichtung, die beispielsweise eine Verbindungsleitung ist oder eine Verbindungsleitung aufweist, kann mit der Brennstoffzelleneinrichtung zusammenwirken, so dass der gespeicherte Wasserstoff aus den Wasserstoff-Speichermodulen und/oder den Hochdruckspeichereinrichtungen der Brennstoffzelleneirichtung zur Verfügung gestellt werden kann. Die Verbindungseinrichtung kann in entsprechender Wese aber auch mit der Elektrolyseeinrichtung zusammenwirken, damit der dort erzeugte Wasserstoff in den Wasserstroff-Speichermodulen und/oder Hochdruckspeichereinrichtungen abgespeichert werden kann. Denkbar ist auch, dass einzelne beladene externe Wasserstoff-Speichermodule und/oder Hochdruckspeichereinrichtungen an der Verbindungseinrichtung angeschlossen werden. Bei der Verbindungseinrichtung handelt es sich bevorzugt um ein so genanntes BUS-System, beispielsweise ein H₂-Bus-System. Optional weist die Verbindungseinrichtung wenigstens eine Ventileinrichtung auf, über die der Fluss und die Menge des Wasserstoffs gesteuert werden kann.

Bei der Verwendung von Wasserstoffanwendungen sind dezidierte Anforderungen gegeben, da es sich um ein geruchsloses Gas handelt und es in Fehlerfällen zu gefährlichen Situationen kommen könnte. Zu diesem Zweck sind die Wasserstoff-Speichermodule mittels eines Verbindungselements mit der Verbindungseinrichtung, insbesondere werkzeuglos, verbunden.

Beispielsweise ist das Verbindungselement, wie beispielsweise in den Technischen Regeln für Gefahrstoffe Schutzmaßnahmen TRGS 500 definiert, mit einem Verfahrensindex von 0,25 als technisch dauerhaft dichtes Verbindungselement ausgebildet, das sich durch ihre Dichtheit auszeichnet. Beispielsweise kann das Verbindungselement als Schnellkupplungsverbindungselement, als Schraubverbindungselement, als Klemmringverbindungselement, als Schneidringverbindungselement oder als konisches Rohrdichtungsverbindungselement ausgebildet sein. Durch diese Art der Verbindung eignen sich die Langzeitspeichereinrichtung, insbesondere die Wasserstoff-Speichermodule und/oder die Hochdruckspeichereinrichtungen, sowohl zur Innenaufstellung als auch zur Außenaufstellung, ohne die Notwendigkeit einer Überwachung und/oder Überprüfung nach Installation und nach durchgeführtem Dichtheitsnachweis.

Gemäß einer Ausführungsform sind die Wasserstoff-Speichermodule und/oder die Hochdruckspeichermodule und/oder die Verbindungseinrichtung und/oder die Verbindungselemente als dauerhaft technisch dichte Komponenten ausgebildet. Solche Komponenten gelten als "dauerhaft technisch dicht", wenn sie so ausgeführt sind, dass sie aufgrund ihrer Konstruktion technisch dicht bleiben oder ihre technische Dichtheit durch Wartung und Überwachung ständig gewährleistet wird.

Um ein unerwünschtes Austreten von Wasserstoff zu verhindern oder zumindest rechtzeitig zu detektieren, weist die Langzeitspeichereinrichtung wenigstens eine Einrichtung zur Druckmessung und/oder wenigstens eine Einrichtung zur Dichtigkeitsmessung in den Wasserstoff-Speichermodulen und/oder in der Verbindungseinrichtung und/oder in den Verbindungselementen der und/oder in der Ventileinrichtung auf.

In einer bevorzugten Ausführungsform weist das Energiesystem ein Lüftungssystem zur Bereitstellung von Luft und/oder Abwärme für das Energiesystem auf. Auch dieses Lüftungssystem ist gemäß einer Ausführungsform modulartig aufgebaut, so dass es variabel an die Anzahl der mit dem Lüftungssystem verbundenen Komponenten, beispielsweise Brennstoffzellenmodulen und/oder Elektrolysemodulen, anpassbar ist. Gemäß einer Ausführungsform ist das Lüftungssystem ausgebildet, mit: einem Luftverteilungskanal, wobei der Luftverteilungskanal wenigstens eine, vorzugsweise zwei oder mehr, insbesondere verschließbare, Verteilungsöffnungen aufweist, wobei jeweils eine Verteilungsöffnung als strömungstechnische Schnittstelle zur Eingangsseite der Brennstoffzelleneinrichtung und der Elektrolyseeinrichtung ausgebildet ist, wobei der Luftverteilungskanal ein erstes Ende und ein dem ersten Ende gegenüberliegendes zweites Ende aufweist, wobei die wenigstens eine Verteilungsöffnung zwischen dem ersten Ende und dem zweiten Ende im Luftverteilungskanal ausgebildet ist, und wobei in dem Luftverteilungskanal optional wenigstens ein Gebläse angeordnet ist oder dem Luftverteilungskanal optional ein solches Gebläse zugeordnet ist, sowie weiterhin mit einem Luftsammelkanal, wobei der Luftsammelkanal wenigstens eine, vorzugsweise zwei oder mehr, insbesondere verschließbare, Sammelöffnungen aufweist, wobei jeweils eine Sammelöffnung als strömungstechnische Schnittstelle zur Ausgangsseite der Brennstoffzelleneinrichtung und der Elektrolyseeinrichtung ausgebildet ist, wobei der Luftsammelkanal ein erstes Ende und ein dem ersten Ende gegenüberliegendes zweites Ende aufweist, und wobei die wenigstens eine Sammelöffnung zwischen dem ersten Ende und dem zweiten Ende im Luftsammelkanal ausgebildet ist. Optional ist in dem Luftsammelkanal wenigstens ein Gebläse angeordnet ist oder dem Luftsammelkanal ist ein solches Gebläse zugeordnet. Bei dem Lüftungssystem handelt es sich beispielsweise um eines oder mehrere Modul(e) des Energiesystems.

Als eine erste Komponente, bei der es sich ebenfalls um ein Modul handeln kann, weist das Lüftungssystem einen Luftverteilungskanal auf. Ein Kanal im Lichte der vorliegenden Erfindung ist insbesondere ein geführter Lauf zum Hindurchführen eines Mediums, beispielweise eines Gases, wie hier insbesondere von Luft. Der Kanal ist vorzugsweise über eine Kanalwandung begrenzt und insbesondere geschlossen, weist aber eine Anzahl von, insbesondere verschließbaren, Öffnungen in der Kanalwandung auf, über die das Medium in den Kanal eintreten und aus diesem austreten kann.

Der Luftverteilungskanal weist wenigstens eine, vorzugsweise zwei oder mehr Verteilungsöffnungen auf, wobei jeweils eine Verteilungsöffnung als strömungstechnische Schnittstelle zur Eingangsseite eines Abwärme-generierenden Moduls oder eines Wasserstoff-Moduls ausgebildet ist. Ein Abwärme-generierendes Modul ist beispielsweise ein Brennstoffzellenmodul oder ein Elektrolysemodul. Ein Wasserstoff-Modul ist insbesondere ein Modul, das während seines Betriebs mit Wasserstoff in Berührung kommt, beispielsweise indem es Wasserstoff erzeugt, oder aber indem es Wasserstoff verbraucht. Bei dem Wasserstoff-Modul handelt es sich ebenfalls bevorzugt um ein Brennstoffzellenmodul oder ein Elektrolysemodul. Im Folgenden wird zur Vereinfachung nur von Modulen gesprochen. In gleicher Weise kann jeweils eine Verteilungsöffnung als strömungstechnische Schnittstelle zur Eingangsseite eines Nicht-Abwärme-generierenden Moduls ausgebildet sein. Ein Nicht-Abwärme-generierendes Modul ist beispielsweise ein Modul zur Erzeugung von demineralisiertem Wasser sehr geringer elektrischer Leitfähigkeit, welches insbesondere für die Elektrolyse benötigt wird. Über den Luftverteilungskanal und die Verteilungsöffnungen wird in die mit dem Luftverteilungskanal verbunden Module, wie ebenfalls im Zusammenhang mit dem erfindungsgemäßen Verfahren weiter unten näher erläutert wird, Luft eingebracht, wobei die eingebrachte Luft die Module anschließend durchströmt.

Dazu weist der Luftverteilungskanal ein erstes Ende und ein dem ersten Ende gegenüberliegendes zweites Ende auf, wobei die wenigstens eine Verteilungsöffnung zwischen dem ersten Ende und dem zweiten Ende im Luftverteilungskanal ausgebildet ist.

Die Anzahl der Verteilungsöffnungen entscheidet darüber, wie viele Module an den Luftverteilungskanal angeschlossen werden können. Grundsätzlich ausreichend für die Ausführbarkeit der Erfindung ist eine einzige Verteilungsöffnung.

Vorteilhaft sind jedoch zwei oder mehr Verteilungsöffnungen vorgesehen. Die Verteilungsöffnungen sind in einer bevorzugten Ausführungsform in dem Luftverteilungskanal angeordnet oder ausgebildet. Die Anzahl der Verteilungsöffnungen entspricht insbesondere der Anzahl der Module, die mit dem Luftverteilungskanal verbunden werden können. Vorzugsweise sind die Verteilungsöffnungen in dem Luftverteilungskanal in dessen Längserstreckung hintereinander beziehungsweise nebeneinander ausgebildet. Bei einer genügend großen Anzahl von Verteilungsöffnungen können solche Verteilungsöffnungen, die bei einer bestimmten modularen Ausgestaltung aktuell nicht benötigt werden, auf geeignete Weise verschlossen sein, wie im weiteren Verlauf der Beschreibung näher erläutert wird. Wenn eine modulare Erweiterung durch Hinzufügen einzelner Module erfolgt, können diese Module dann mit entsprechenden "freien" Verteilungsöffnungen verbunden werden.

In einer bevorzugten Ausführungsform weist der Luftverteilungskanal eine fixe Länge auf, mit einer Anzahl von Verteilungsöffnungen, die nicht unbedingt alle gleichzeitig in Benutzung sind.

In einer anderen bevorzugten Ausführung ist der Luftverteilungskanal längenveränderlich ausgebildet. Beispielsweise ist der Luftverteilungskanal aus einer Anzahl wahlweise miteinander verbindbarer Kanalelemente gebildet. Die einzelnen Kanalelemente werden in geeigneter Weise miteinander verbunden, beispielsweise ineinandergesteckt, über Verbindungsstücke miteinander verbunden, oder dergleichen. Jedes Kanalelement verfügt dabei vorzugsweise über wenigstens eine Verteilungsöffnung. In anderer Ausgestaltung ist der Luftverteilungskanal teleskopartig ausziehbar. Bei einer solchen längenveränderlichen Ausgestaltung wird die Länge des Kanals an die Anzahl der angeschlossenen Module angepasst. Bei einer modulartigen Erweiterung wird der Luftverteilungskanal entsprechend verlängert, bei einer Reduzierung von Modulen entsprechend verkürzt.

Gemäß einer alternativen Ausführungsform ist in dem Luftverteilungskanal selbst nur eine einzige Verteilungsöffnung vorgesehen. In diesem Fall ist die Verteilungsöffnung bevorzugt mit einem sich an die Verteilungsöffnung anschließenden Verteilungssystem verbunden, welches den aus dem Verteilungsöffnung austretenden Luftstrom in zwei oder mehrere TeilLuftströme aufteilt. Das Verteilungssystem befindet sich dann strömungstechnisch gesehen zwischen dem Luftverteilungskanal und dem Abwärme-generierenden Modul. Dies kann beispielsweise mittels eines Ansatzstücks realisiert werden, welches mit einem Ende an der Verteilungsöffnung angeordnet ist. Am anderen, gegenüberliegenden Ende des Ansatzstücks befindet sich dann ein Verteilerelement, das mit zwei oder mehr Verteilerleitungen verbunden ist oder in zwei oder mehr Verteilerleitungen übergeht. Die durch das Ansatzstück bereitgestellte Leitung wird somit in eine Anzahl von Verteilerleitungen aufgefächert. Jede der Verteilerleitungen, die vorzugsweise individuell über eine geeignete Vorrichtung zum Öffnen und/oder Schließen der Verteilerleitung verfügen, beispielsweise über ein geeignetes Ventil, eine Klappe, insbesondere eine Motor-getriebene Klappe, oder dergleichen, ist dann mit einem Modul verbunden oder kann mit einem Modul verbunden werden. Wenn eine genügende Anzahl von Verteilerleitungen, die beispielsweise aus einem flexiblen Material bestehen, bereitgestellt ist, kann auf diese Weise ebenfalls eine modulartige Anpassung erfolgen, indem die gewünschte oder erforderliche Anzahl von Modulen an entsprechende Verteilerleitungen angeschlossen wird. Nicht benötigte Verteilerleitungen sind verschlossen. Bei einer solchen Ausgestaltung ist es für eine modulare Anpassung möglich, dass die einzelnen Module nicht nur hintereinander beziehungsweise nebeneinander, sondern auch übereinander angeordnet werden können.

In dem Luftverteilungskanal, vorzugsweise im Bereich von dessen erstem Ende, ist optional wenigstens ein Gebläse angeordnet, oder dem Luftverteilungskanal ist ein solches Gebläse zugeordnet ist. Im erstgenannten Fall befindet sich das Gebläse innerhalb des Luftverteilungskanals. Im zweiten Fall kann sich das Gebläse auch außerhalb des Luftverteilungskanals befinden, steht aber mit diesem strömungstechnisch in Verbindung. Durch das Gebläse wird im Luftverteilungskanal eine ausreichend hohe und gerichtete Luftströmung, das heißt eine erzwungene Luftströmung, erzeugt, so dass die Luft in ausreichender Weise gleichzeitig über alle benutzten Verteilungsöffnungen in daran angeschlossene Module eingebracht werden kann. Bei dem Gebläse handelt es sich vorzugsweise um ein zentrales Gebläse. Die Erfindung ist nicht auf bestimmte Typen von Gebläsen beschränkt. Beispielsweise kann das Gebläse als Radialgebläse und in druckarmen Situationen auch als Axialgebläse ausgeführt sein. In einer anderen Ausgestaltung können auch zwei oder mehr solcher Gebläse in entsprechender Weise bereitgestellt sein.

Als eine zweite Komponente, bei der es sich ebenfalls um ein Modul handeln kann, weist das Lüftungssystem einen Luftsammelkanal auf. Luft, die die einzelnen Module durchströmt, tritt auf der Ausgangsseite der Module aus und in den Luftsammelkanal ein. Dazu weist der Luftsammelkanal wenigstens eine, vorzugsweise zwei oder mehr Sammelöffnungen auf, wobei jeweils eine Sammelöffnung als strömungstechnische Schnittstelle zur Ausgangsseite eines Abwärme-generierenden Moduls ausgebildet ist Der Luftsammelkanal weist ein erstes Ende und ein dem ersten Ende gegenüberliegendes zweites Ende auf, wobei die wenigstens eine Sammelöffnung zwischen dem ersten Ende und dem zweiten Ende im Luftsammelkanal ausgebildet ist.

Die Anzahl der Sammelöffnungen entscheidet darüber, wie viele Module an den Sammelkanal angeschlossen werden können. Grundsätzlich ausreichend für die Ausführbarkeit der Erfindung ist eine einzige Sammelöffnung. In einer bevorzugten Ausführungsform entspricht die Anzahl der Sammelöffnungen im Luftsammelkanal der Anzahl der Verteilungsöffnungen im Luftverteilungskanal. Luft, die über die Verteilungsöffnungen aus dem Luftverteilungskanal in die Module einströmt, durchströmt die Module und tritt an den Modulen ausgangseitig aus und über die Sammelöffnungen in den Luftsammelkanal ein. Dabei wird, je nach Modultyp, gegebenenfalls auch in dem Modul generierte Abwärme mit in den Luftsammelkanal ausgetragen.

Vorteilhaft weist der Luftsammelkanal zwei oder mehr Sammelöffnungen auf. Die Sammelöffnungen sind in einer bevorzugten Ausführungsform in dem Luftsammelkanal angeordnet oder ausgebildet. Die Anzahl der Sammelöffnungen entspricht insbesondere der Anzahl der Module, die mit dem Luftsammelkanal verbunden werden können. Vorzugsweise sind die Sammelöffnungen in dem Luftsammelkanal in dessen Längserstreckung hintereinander beziehungsweise nebeneinander ausgebildet. Bei einer genügend großen Anzahl von Sammelöffnungen können solche Sammelöffnungen, die bei einer bestimmten modularen Ausgestaltung aktuell nicht benötigt werden, auf geeignete Weise verschlossen sein. Auch dies wird im weiteren Verlauf der Beschreibung näher erläutert. Wenn eine modulare Erweiterung durch Hinzufügen einzelner Module erfolgt, können diese Module dann mit entsprechenden "freien" Sammelöffnungen verbunden werden. Vorzugsweise entspricht die Anzahl der Sammelöffnungen der Anzahl der Verteilungsöffnungen.

In einer bevorzugten Ausführungsform weist der Luftsammelkanal eine fixe Länge auf, mit einer Anzahl von Sammelöffnungen, die nicht unbedingt alle gleichzeitig in Benutzung sind.

In einer anderen bevorzugten Ausführung ist auch der Luftsammelkanal längenveränderlich ausgebildet. Beispielsweise ist der Luftsammelkanal, so wie der Luftverteilungskanal auch, aus einer Anzahl wahlweise miteinander verbindbarer Kanalelemente gebildet. Die einzelnen Kanalelemente werden in geeigneter Weise miteinander verbunden, beispielsweise ineinandergesteckt, über Verbindungsstücke miteinander verbunden, oder dergleichen. Jedes Kanalelement verfügt dabei vorzugsweise über wenigstens eine Sammelöffnung. In anderer Ausgestaltung ist der Luftsammelkanal teleskopartig ausziehbar. Bei einer solchen längenveränderlichen Ausgestaltung wird die Länge des Kanals auf die Anzahl der angeschlossenen Module angepasst. Bei einer modulartigen Erweiterung wird der Luftsammelkanal entsprechend verlängert, bei einer Reduzierung von Modulen entsprechend verkürzt.

Gemäß einer alternativen Ausführungsform ist in dem Luftsammelkanal selbst nur eine einzige Sammelöffnung vorgesehen. In diesem Fall ist die Sammelöffnung bevorzugt mit einem Verteilungssystem verbunden, welches den aus die aus den Modulen austretenden Luftströme bündelt und über die eine Sammelöffnung in den Luftsammelkanal einführt. Das Verteilungssystem befindet sich strömungstechnisch gesehen zwischen dem Modul und dem Luftsammelkanal. Dies kann beispielsweise mittels eines Ansatzstücks realisiert werden, welches mit einem Ende an der Sammelöffnung angeordnet ist. Am anderen, gegenüberliegenden Ende des Ansatzstücks befindet sich dann ein Bündelelement, das mit zwei oder mehr Bündelleitungen verbunden ist, oder in dem zwei oder mehr Bündelleitungen zusammengeführt sind. Jede Bündelleitung ist mit einem der Bündelleitung zugeordneten Modul verbunden. In der durch das Ansatzstück bereitgestellten Leitung wird somit die aus den einzelnen Modulen austretende Luft gebündelt. Jede der Bündelleitungen, die vorzugsweise individuell über eine geeignete Vorrichtung zum Öffnen und/oder Schließen der Bündelleitung verfügen, beispielsweise über ein geeignetes Ventil, eine Klappe, insbesondere eine Motor-getriebene Klappe, oder dergleichen, ist dann mit einem Modul verbunden oder kann mit einem Modul verbunden werden. Wenn eine genügende Anzahl von Bündelleitungen, die beispielsweise aus einem flexiblen Material bestehen, bereitgestellt ist, kann auf diese Weise ebenfalls eine modulartige Anpassung erfolgen, indem die gewünschte oder erforderliche Anzahl von Modulen an entsprechende Bündelleitungen angeschlossen wird. Nicht benötigte Bündelleitungen sind verschlossen. Bei einer solchen Ausgestaltung ist es für eine modulare Anpassung möglich, dass die einzelnen Module nicht nur hintereinander beziehungsweise nebeneinander, sondern auch übereinander angeordnet werden können. Vorzugsweise entspricht die Anzahl der Bündelleitungen der Anzahl der im Zusammenhang mit dem Luftverteilungskanal beschriebenen Verteilerleitungen.

In dem Luftsammelkanal, vorzugsweise im Bereich von dessen zweitem Ende, oder alternativ hinter dem zweiten Ende, ist optional wenigstens ein Gebläse angeordnet, oder dem Luftsammelkanal ist ein solches Gebläse zugeordnet. Im erstgenannten Fall befindet sich das Gebläse innerhalb des Luftsammelkanals. Im zweiten Fall kann sich das Gebläse auch außerhalb des Luftsammelkanals befinden, steht aber mit diesem strömungstechnisch in Verbindung. Durch das Gebläse wird im Luftsammelkanal eine ausreichend starke und gerichtete Luftströmung erzeugt, so dass die Luft in ausreichender Weise gleichzeitig über alle benutzten Sammelöffnungen aus den daran angeschlossenen Modulen abgesaugt werden kann. Die Luft kann dann, vorzugsweise über das Gebläse oder durch Unterstützung des Gebläses, anderen Komponenten zur Verfügung gestellt werden. Bei dem Gebläse handelt es sich vorzugsweise um ein zentrales Gebläse. Die Erfindung ist nicht auf bestimmte Typen von Gebläsen beschränkt. Beispielsweise kann das Gebläse als Radialgebläse und in druckverlustarmen Situationen auch als Axialgebläse ausgeführt sein. In einer anderen Ausgestaltung können auch zwei oder mehr solcher Gebläse in entsprechender Weise bereitgestellt sein.

Gemäß der vorliegenden Erfindung können mehrere Ausgestaltungsvarianten realisiert sein. Gemäß einer ersten Ausgestaltungsvariante befindet sich wenigstens ein Gebläse im Luftverteilungskanal oder wirkt mit dem Luftverteilungskanal zusammen. Gemäß einer zweiten Ausgestaltungsvariante befindet sich wenigstens ein Gebläse im Luftsammelkanal oder wirkt mit dem Luftsammelkanal zusammen. Gemäß einer dritten Ausgestaltungsvariante befindet sich wenigstens ein Gebläse sowohl im Luftverteilungskanal, als auch im Luftsammelkanal, oder wirkt mit dem Luftverteilungskanal und dem Luftsammelkanal zusammen.

Das erfindungsgemäße Lüftungssystem ist vorzugsweise ein modulares Konzept für einzelne Module, die bedarfsgerecht mit einem Luftverteilungskanal am Eingang und einem Sammelkanal am Ausgang kombiniert sind.

In bevorzugter Ausgestaltung ist der Luftverteilungskanal als Hohlprofilelement ausgebildet, wobei die wenigstens eine Verteilungsöffnung in der Seitenwandung des Luftverteilungskanals ausgebildet ist. Ein Hohlprofileelement ist insbesondere ein langgestrecktes innen hohles Element, wobei der Innenraum des Hohlprofilelements von einer Profil-Seitenwandung umgeben und begrenzt ist. Das Hohlprofilelement ist insbesondere rohrförmig ausgebildet und kann einen runden, rechteckigen, ovalen oder dergleichen Querschnitt aufweisen. Alternativ oder zusätzlich kann in entsprechender Weise der Luftsammelkanal als Hohlprofilelement ausgebildet sein, wobei die wenigstens eine Sammelöffnung in der Seitenwandung des Luftsammelkanals ausgebildet ist.

Vorzugsweise weisen die Module an einer Eingangsseite wenigstens eine Eingangsöffnung und an einer Ausgangsseite wenigstens eine Ausgangsöffnung auf, wobei die Eingangsöffnung mit der wenigstens einen Verteilungsöffnung des Luftverteilungskanals zusammenwirkt, und wobei die Ausgangsöffnung mit der wenigstens einen Sammelöffnung des Luftsammelkanals zusammenwirkt. Bereitgestellt ist vorzugsweise eine Vorrichtung zum Öffnen und Schließen des Übergangs zwischen dem Modul und dem Luftverteilungskanal, und/oder eine Vorrichtung zum Öffnen und Schließen des Übergangs zwischen dem Modul und dem Luftsammelkanal. Diese Vorrichtung kann beispielswiese in Form einer Klappe, etwa einer Motor-getriebenen Klappe, einer Rückschlagklappe, in Form eines Ventils, eines Drosselelements, und dergleichen ausgebildet sein. In einer bevorzugten Ausführungsform stellen die beschriebenen Vorrichtungen zum Öffnen und Schließen Bestandteile des Luftverteilungskanals und/oder des Luftsammelkanals dar. In diesem Fall sind die Vorrichtungen derart bereitgestellt, dass sie in der Lage sind, die Verteilungsöffnungen im Luftverteilungskanal und/oder die Sammelöffnungen im Luftsammelkanal zu verschließen. In einer anderen Ausgestaltung stellen die beschriebenen Vorrichtungen zum Öffnen und Schließen Bestandteile des Moduls dar. In diesem Fall sind die Vorrichtungen derart bereitgestellt, dass sie in der Lage sind, die Eingangsöffnung und/der die Ausgangsöffnung des Moduls zu verschließen. Es sind aber auch Kombinationen der beiden genannten Varianten möglich.

Vorzugsweise ist das Gebläse im Luftverteilungskanal mit einer Steuereinrichtung und/oder mit einer Druckmesseinrichtung, beispielsweise einem Drucksensorelement, welche(s) zur Druckmessung im Luftsammelkanal bereitgestellt ist, verbunden. Auf diese Weise kann über eine Steuerung des Gebläses sichergestellt werden, dass ausreichend Luft und damit gegebenenfalls auch Abwärme in den Luftsammelkanal gelangt.

In einer bevorzugten Ausführungsform weist der Luftsammelkanal an seinem zweiten Ende eine zweite Luftausgangsöffnung auf. Der Luftsammelkanal kann, wie im Folgenden näher beschrieben wird, über eine Anzahl von Luftausgangsöffnungen verfügen. Da der Luftsammelkanal, wie im Folgenden beschrieben ist, mehrere Luftausgangsöffnungen aufweisen kann, werden zur Vereinfachung der Zuordnung und zur Unterscheidung diese Luftausgangsöffnungen nummeriert. Gleiches gilt für entsprechende Vorrichtungen zum Öffnen und/oder Schießen der Luftausgansöffnungen.

Die zweite Luftausgangsöffnung ist zur Abfuhr von Luft und/oder Abwärme aus dem Luftsammelkanal bereitgestellt. In einer bevorzugten Ausführungsform ist die zweite Luftausgangsöffnung als Schnittstelle zu einer Lüftungseinrichtung und/oder zu einer Wärmepumpeneinrichtung und/oder zu einem Raum in einem Gebäude und/oder zu einer Fortluftabfuhr ausgebildet, oder mit einer solchen Schnittstelle verbunden. Um den aus dem Luftsammelkanal abgeführten Luftstrom, der zuvor aus den einzelnen Modulen austrat, und gegebenenfalls auch aus den Modulen ausgetragene Abwärme beinhaltet, mengenmäßig steuern zu können, weist der Luftsammelkanal, vorzugsweise an seinem zweiten Ende, insbesondere an oder im Bereich der zweiten Luftausgangsöffnung eine zweite Vorrichtung zum Öffnen und/oder Schließen der zweiten Luftausgangsöffnung, insbesondere eine Klappe, ein Drosselelement, ein Ventil, oder dergleichen auf. Bei der Klappe handelt es sich vorzugsweise um eine Motor-getriebene Klappe, das heißt um eine Klappe, die mittels eines Motors angetrieben, sprich geöffnet oder teilgeöffnet, und geschlossen wird. Vorzugsweise befindet sich auf diese Weise im Ausgang dieses Luftsammelkanals eine Vorrichtung zur Regulierung eines Überdruckes zur Sicherung der für den permanenten Dichtigkeits- und störungsfreien Abfuhr der Abluft notwendigen Betriebsweise, insbesondere für Wasserstoff produzierende und emittierenden Komponenten beziehungsweise Module. Diese Abluft kann wahlweise einer Lüftungseinrichtung, beispielsweise mit kombiniertem Wärmetauscher., etwa einem Kreuzstromwärmetauscher, und/oder einer Wärmepumpeneinrichtung, insbesondere einer Luft-Wärmepumpe, als Energiequelle, und/oder einem Aufstellungsraum zugeführt, oder als Fortluft abgeführt werden.

Vorzugsweise weist der Luftverteilungskanal an seinem zweiten Ende eine Luftausgangsöffnung auf, welche zur Abfuhr von Luft aus dem Luftverteilungskanal bereitgestellt ist. In bevorzugter Ausführung ist die Luftausgangsöffnung als Schnittstelle zu einer Lüftungseinrichtung und/oder zu einer Luft-Wärmepumpe und/oder zu einem Raum und/oder zu einer Fortluftabfuhr ausgebildet, oder mit einer solchen Schnittstelle verbunden. Um den aus dem Luftverteilungskanal über die Luftausgangsöffnung austretenden Luftstrom mengenmäßig einstellen und regulieren zu können, weist der Luftverteilungskanal, vorzugsweise an seinem zweiten Ende, insbesondere an oder im Bereich der Luftausgangsöffnung, eine Vorrichtung zum Öffnen und/oder Schließen der Luftausgangsöffnung auf, die insbesondere eine Klappe, etwa als Motor-getriebene Klappe, als Ventil, als Drosselelement oder dergleichen ausgebildet ist.

Eine solche Vorrichtung zum Öffnen und/oder Schließen der Luftausgangsöffnung des Luftverteilungskanals hat insbesondere die folgende Funktion. Für nachgeschaltete Lüftungseinrichtungen und/oder Wärmepumpeneinrichtungen kann es unter Umständen erforderlich sein, dass auch ohne Betrieb des Gebläses im Luftverteilungskanal Luft zur Versorgung autonom durch ein weiteres Gebläse, welches Bestandteil der dem Lüftungssystem nachgeordneten Lüftungseinrichtung ist, gesaugt wird. Dieser Betrieb liegt dann vor, wenn beispielsweise keine Wasserstoffmodule in Betrieb sind und/oder besonders energiesparende Betriebsweisen durch Vermeidung eines Doppelbetriebs von Gebläsen erreicht werden sollen. Diese angesaugte Luft, kann wie im Normalbetrieb des Lüftungssystem, wenn Luft aus dem Luftverteilungskanal in die angeschlossenen Module eingeführt wird, wahlweise Raumluft, Abluft oder Außenluft darstellen, welche als Quelle dient. Eine weitere Notwendigkeit dieser Vorrichtung zum Öffnen und/oder Schließen der Luftausgangsöffnung des Luftverteilungskanals ist für kombinierte Lüftungsgeräte mit Kreuzstromwärmetauscher und Außenluft-Wärmetauscher, die vorzugsweise von einer umschaltbaren Abluftwärmepumpe eine Kühlung oder eine Vorerwärmung der Außenluft bereitstellen. Im Sommer gibt es gelegentlich Momente, wenn die Hauptaufgabe der Luft-/Wasserwärmepumpe die Kältebereitstellung ist und eine Abwärme auf der Quellseite der Wärmepumpe kontraproduktiv ist, vor allem hierzu ist die Vorrichtung zum Öffnen und/oder Schließen der Luftausgangsöffnung des Luftverteilungskanals eine technische Lösung.

Vorzugsweise weist der Luftverteilungskanal an seinem ersten Ende eine Lufteingangsöffnung auf, die zur Zufuhr von Luft, insbesondere von Außenluft und/oder von Abluft und/oder von Fortluft in den Luftverteilungskanal bereitgestellt ist. In einer bevorzugten Ausführungsform ist die Lufteingangsöffnung des Luftverteilungskanals mit einem Luftzufuhrkanal verbunden.

In einer weiteren bevorzugten Ausführungsform weist das Lüftungssystem einen Luftrezirkulationskanal auf, wobei der Luftsammelkanal, vorzugsweise an seinem ersten Ende, eine erste Luftausgangsöffnung aufweist, über die der Luftrezirkulationskanal mit dem Luftsammelkanal verbunden ist. Weiterhin weist der Luftsammelkanal, vorzugsweise an seinem ersten Ende, oder aber der Luftrezirkulationskanal im Übergang zum Luftsammelkanal, eine erste Vorrichtung zum Öffnen und/oder Schließen der ersten Luftausgangsöffnung, insbesondere eine Klappe, etwa eine Motor-getriebene Klappe, ein Ventil, ein Drosselelement, oder dergleichen, auf. In besonderen Ausführungssituationen, die beispielsweise die Verwendung von Außenluft für den Luftverteilungskanal und dessen Gebläse als Quelle vorsieht, und in klimatisch anspruchsvollen Regionen, können zumindest zeitweilig negative Außentemperaturen vorliegen. Durch einen, insbesondere parallelen, Luftrezirkulationskanal ist es möglich, die Abwärme der Abwärme-generierenden Module, etwa der Wasserstoffmodule, zur Anhebung der gemischten Außenluft auf einen frostschutzfreien Betrieb zu vollziehen. Mithilfe der Rezirkulation von Abwärme aus den Abwärme-generierenden Modulen kann ein nahezu frostfreier Betrieb sichergestellt werden: Dabei wird die warme Luft hinter den Abwärme-generierenden Modulen rezirkuliert und so die Eintrittstemperatur vor den Modulen, beispielsweise auf mindestens 4 Grad, angehoben. Vorzugsweise ist der Luftrezirkulationskanal als der Luftzufuhrkanal ausgebildet ist oder parallel oder außerhalb zum Luftzufuhrkanal geführt.

In weiterer bevorzugter Ausgestaltung weist das Lüftungssystem einen Zweitluftkanal auf. Der Luftsammelkanal, vorzugsweise im Bereich seines ersten Endes, weist insbesondere eine dritte Luftausgangsöffnung auf, über die der Zweitluftkanal eingangsseitig mit dem Luftsammelkanal verbunden ist. Der Luftsammelkanal oder der Zusatzkanal weisen optional eine dritte Vorrichtung zum Öffnen und/oder Schließen der dritten Luftausgangsöffnung, insbesondere eine Klappe, etwa eine Motor-getriebene Klappe, ein Ventil, ein Drosselelement, oder dergleichen, auf. Ausgangsseitig ist der Zweitluftkanal mit dem Luftverteilungskanal verbunden. Dieser Zweitluftkanal hat insbesondere folgende Funktion.

Bei Verwendung nachgeschalter Lüftungseinrichtungen und/oder Wärmepumpeneinrichtungen, die vorzugsweise ein eigenes Gebläse haben, kann über eine Volumenstromdifferenz über einen Zweitluftkanal mit Vorrichtung zum Öffnen und/oder Schließen der dritten Luftausgangsöffnung ein notwendiger Ausgleich für den synchronen Volumenstrom geschaffen werden. Dies ermöglicht einen gut abgestimmten Betrieb für Lüftungseinrichtungen und Wärmepumpeneinrichtungen, die aufgrund ihrer Funktionsbetriebes einen ausgeglichenen Volumenstrom benötigen und so nur ein Teilvolumenstrom der gesamten Abwärme der Abwärme-generierenden Module erhalten und den Rest über den Zweitluftkanal. Der Zweitluftkanal kann auch zur künstlichen Temperaturreduzierung oder Zusatzlüftung von etwaigen Schadgasen verwendet werden.

Bevorzugt kann das Lüftungssystem, insbesondere der Luftverteilungskanal und/oder der Luftsammelkanal, mit einer Lüftungseinrichtung verbunden sein oder eine Schnittstelle zu einer Lüftungseinrichtung aufweisen.

Um die Abwärme aus der Brennstoffzelleneinrichtung und/oder der Elektrolyseeinrichtung neben der Lüftung auch noch für weitere Prozesse nutzen zu können, sind die Brennstoffzelleneinrichtung und/oder die Elektrolyseeinrichtung und/oder das Lüftungssystem, insbesondere der Luftverteilungskanal und/oder der Luftsammelkanal, mit einer Wärmepumpeneinrichtung , etwa einer Luft-Wärmepumpe, insbesondere einer AbluftWärmepumpe und/oder einer Wasser-Wärmepumpe, verbunden, oder weisen eine Schnittstelle zu einer Wärmepumpeneinrichtung auf.

Vorzugsweise weist das Energiesystem eine Steuereinrichtung zur Steuerung der einzelnen Komponenten des Energiesystems und/oder zur Erfassung und/oder Erzeugung und/oder Verarbeitung von Betriebsdaten der einzelnen Komponenten des Energiesystems, insbesondere der einzelnen Module des Energiesystems, und/oder zum Erzeugen von Konfigurationsdaten für die einzelnen Komponenten des Energiesystems, insbesondere der einzelnen Module der Komponenten des Energiesystems, anhand der Betriebsdaten, auf. Gemäß einer Ausführungsform weist die Steuereinrichtung eine Rechnereinrichtung auf, oder ist als eine solche Rechnereinrichtung ausgebildet, oder weist eine Schnittstelle zu einer solchen Rechnereinrichtung auf. In der Steuereinrichtung oder der Rechnereinrichtung laufen die Betriebsdaten der einzelnen Komponenten sowie deren Modulen zusammen und können ausgewertet, gegen Referenzdaten verglichen, aber auch gegeneinander verglichen werden. Gemäß einer Ausführungsform ist die Steuereinrichtung oder die Rechnereinrichtung derart eingerichtet, dass sie in der Lage ist, aufgrund dieser Erkenntnisse elektronisch und vorzugsweise automatisch zu ermitteln, ob und in welcher Weise einzelne Komponenten durch Hinzufügen oder Entfernen einzelner Module angepasst werden müssen oder sollen. Dies wird auch im Zusammenhang mit dem erfindungsgemäßen Verfahren weiter unten näher beschrieben, so dass hinsichtlich der Ausgestaltung und Funktionsweise der Steuereinrichtung oder der Rechnereinrichtung an dieser Stelle vollinhaltlich auch auf die Ausführungen weiter unten zum erfindungsgemäßen Verfahren Bezug genommen und verwiesen wird. Insbesondere werden über die Steuereinrichtung oder die Rechnereinrichtung auch die einzelnen Vorrichtungen zum Öffnen und/oder Schließen von Öffnungen, etwa Motor-getriebene Klappen, des Lüftungssystems gesteuert.

Vorzugsweise weist die Steuereinrichtung oder die Rechnereinrichtung eine Eingabeeinrichtung zur Eingabe von Daten oder eine Schnittstelle zu einer Eingabeeinrichtung zur Eingabe von Daten auf. Damit können dem Energiesystem über die Steuereinrichtung oder die Rechnereinrichtung zur modularen Anpassung Vorgaben von extern, das heißt von außerhalb des Energiesystems, bereitgestellt werden, etwa in Form einer Nutzeranforderung. Alternativ oder zusätzlich weist die Steuereinrichtung oder die Rechnereinrichtung eine Ausgabeeinrichtung zur Ausgabe von Daten oder eine Schnittstelle zu einer Ausgabeeinrichtung zur Ausgabe von Daten auf.

Bei dem Energiesystem handelt es sich insbesondere um ein aus mehreren Komponenten bestehendes Ganzes, wobei die Komponenten miteinander zu einer zweckgebundenen Einheit verbunden sind. Im vorliegenden Fall handelt es sich bei dem Energiesystem um ein System zum Erzeugen beziehungsweise Bereitstellen von Energie, vorzugsweise von elektrischer Energie. Grundsätzlich ist die Erfindung nicht auf bestimmte Arten von Energiesystemen beschränkt.

In einer bevorzugten Ausführungsform handelt es sich bei dem Energiesystem um ein Gebäudeenergiesystem. Gebäudeenergiesysteme sind grundsätzlich aus dem Stand der Technik bekannt und dienen der Versorgung von Gebäuden, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen. Ein solches Gebäudeenergiesystem schafft die Grundlage dafür, dass der Energiebedarf eines Gebäudes, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Gebäudes im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden.

Ein solches Gebäudeenergiesystem ist beispielsweise in den Patentanmeldungen WO 2017/089468 A1 und WO 2017/089469 A1 der Anmelderin offenbart und beschrieben, deren Offenbarungsgehalt in die Beschreibung der vorliegenden Patentanmeldung mit einbezogen wird.

Gemäß einer bevorzugten Ausführungsform weist ein Gebäudeenergiesystem der genannten Art die folgenden Grundmerkmale auf:
- einen DC-Einspeisepunkt, bevorzugt ausgebildet für eine Nenn-Spannung von 48 Volt oder für eine Nennspannung zwischen 200 und 1000 Volt und/oder einem AC-Einspeisepunkt, bevorzugt ausgebildet für eine Spannung von 230 Volt oder 110 Volt oder einer 3-phasigen Einspeisung bei pro Phase 230 Volt oder 110 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einen elektrisch mit dem DC-Einspeisepunkt oder mit dem AC-Einspeisepunkt wenigstens zeitweise verbundenen PV-Generator zum Erzeugen einer elektrischen PV-Leistung,
- eine elektrisch mit dem DC-Einspeisepunkt oder mit dem AC-Einspeisepunkt wenigstens zeitweise verbundene Brennstoffzelleneinheit zum Erzeugen einer elektrischen Brennstoffzellen-Leistung,
- eine elektrisch mit dem DC-Einspeisepunkt verbundene Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einen Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- eine Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- ein Steuermodul zum Steuern der Hausenergieanlage.

Das Energiesystem kann als reines Innensystem aufgestellt werden und saugt die Luft im Aufstellraum an und gibt diese auch wieder in den selbigen ab. Das Energiesystem kann je nach Ausgestaltung mit einer dezentralen Gebäuderaumlüftung verbunden sein, oder Bestandteil einer Gebäuderaumlüftung sein, oder eine Gebäuderaumlüftung aufweisen.

Gemäß dem zweiten Aspekt der Erfindung wird ein Verfahren zum, insbesondere automatischen, Konfigurieren eines modular aufgebauten Energiesystems bereitgestellt, welches die Merkmale des unabhängigen Patentanspruchs 14 aufweist. Das Verfahren wird in einem Energiesystem gemäß dem ersten Aspekt der Erfindung durchgeführt. Hinsichtlich des Ablaufs des Verfahrens wird zur Vermeidung von Wiederholungen an dieser Stelle vollinhaltlich auch auf die Ausführungen zum ersten Erfindungsaspekt und auf die allgemeine Beschreibung der Erfindung Bezug genommen und verwiesen.

Das Verfahren des zweiten Erfindungsaspekts wird insbesondere von einer Rechnereinrichtung ausgeführt. Eine "Rechnereinrichtung" im Sinne der vorliegenden Erfindung ist insbesondere eine Datenverarbeitungseinrichtung, ein elektronisches Rechengerät oder eine elektronische Rechenanlage, ein Computer, oder dergleichen. Eine Rechnereinrichtung ist insbesondere ein Gerät, das mittels programmierbarer Rechenvorschriften, beispielsweise einem Computerprogrammprodukt, etwa einer Software oder einem Algorithmus, Daten verarbeitet. Die Rechnereinrichtung kann beispielsweise die Steuereinrichtung des Energiesystems sein, oder einen Bestandteil der Steuereinrichtung bilden, oder eine zur Steuereinrichtung unabhängige Komponente sein. Die Rechnereinrichtung weist insbesondere Mittel zur Durchführung des Verfahrens gemäß dem zweiten Aspekt der Erfindung auf. Gemäß dem zweiten Aspekt der Erfindung werden insbesondere sämtliche Verfahrensschritte vollständig durch Computerprogrammbefehle auf Mitteln ausgeführt, die im Kontext der Erfindung allgemeine Funktionen der Datenverarbeitung erfüllen.

Das Verfahren gemäß dem zweiten Aspekt der Erfindung ist durch folgende, insbesondere in der Rechnereinrichtung, ausgeführte Schritte gekennzeichnet:
a) In der Rechnereinrichtung des Energiesystems: Erfassen und/oder Erzeugen und/oder Verarbeiten von Betriebsdaten zumindest einzelner Komponenten des Energiesystems, insbesondere der einzelnen Module der Komponenten des Energiesystems. Dieser Schritt erfolgt beispielsweise in einer Betriebsdatenerfassungseinrichtung der Rechnereinrichtung. Die Betriebsdaten werden, zumindest rudimentär, von den einzelnen Komponenten des Energiesystems der Rechnereinrichtung bereitgestellt, beispielsweise zu der Rechnereinrichtung übertragen, und in dieser empfangen und gegebenenfalls weiterverarbeitet. Die Übertragung kann über eine Signalleitung, drahtlos oder drahtgebunden, erfolgen. Eine "Signalleitung" im Lichte der vorliegenden Erfindung ist insbesondere die Verbindung zwischen einer, gegebenenfalls externen, Funktionseinheit und der Rechnereinrichtung, beispielsweise von oder zu der Rechnereinrichtung. Zum Empfang weist die Rechnereinrichtung eine Schnittstelle auf. Eine "Schnittstelle" im Lichte der vorliegenden Erfindung ist insbesondere eine Verbindungsstelle zwischen der Rechnereinrichtung und externen Funktionseinheiten, an der der Austausch von Daten oder Steuersignalen erfolgt. Die auf diese Weise bereitgestellten Betriebsdaten können in einer Speichereinrichtung abgespeichert werden.
b) In der Rechnereinrichtung: Erzeugen von Konfigurationsdaten für die zumindest einzelnen Komponenten des Energiesystems, insbesondere der einzelnen Module der Komponenten des Energiesystems, anhand der Betriebsdaten. Dieser Schritt erfolgt beispielsweise in einer Erzeugungseinrichtung der Rechnereinrichtung. Bei den Konfigurationsdaten handelt es sich insbesondere um solche Daten, die die Gestaltung oder Anpassung des Energiesystems, oder zumindest einzelner Komponenten des Energiesystems, an die jeweils vorherrschenden Bedürfnisse, beschreiben. Zur Erzeugung der Konfigurationsdaten ist gemäß einer Ausführungsform realisiert, dass die Betriebsdaten mit Vergleichsdaten verglichen werden. Bei den Vergleichsdaten kann es sich beispielsweise um Vorgaben für den Betrieb des Energiesystems, beispielsweise hinsichtlich Art und Umfang, handeln. Bei den Vergleichsdaten kann es sich beispielsweise auch um, etwa über einen definierten Zeitraum, kumulierte Betriebsdaten handeln, wobei die Vergleichsdaten dann daraus abgeleitet werden. Die Vergleichsdaten können beispielsweise in der Rechnereinrichtung, insbesondere in einer der Rechnereinrichtung zugeordneten Speichereinrichtung, abgelegt sein, oder der Rechnereinrichtung von außen zugespielt werden. In der Erzeugungseinrichtung erfolgt dann ein Vergleich der Betriebsdaten mit den Vergleichsdaten.
c) Über die Rechnereinrichtung: Bereitstellen der Konfigurationsdaten einem Nutzer des Energiesystems, insbesondere über eine Ausgabeeinrichtung. Dazu weist die Rechnereinrichtung beispielsweiseeine entsprechende Schnittstelle auf. Anhand der bereitgestellten Konfigurationsdaten kann das Energiesystem, beziehungsweise können zumindest einzelne Komponente davon, dann entsprechend angepasst werden, beispielsweise erweitert oder verkleinert werden.

Vorzugsweise ist das Verfahren zusätzlich durch folgenden Schritt gekennzeichnet:
d) In der Rechnereinrichtung: Empfangen von Anpassungsdaten für das Energiesystem, beispielsweise in Betriebsdatenerfassungseinrichtung der Rechnereinrichtung, und Erzeugen der Konfigurationsdaten in Schritt b) unter Berücksichtigung der Anpassungsdaten, beispielsweise in der Erzeugungseinrichtung der Rechnereinrichtung. Auf diese Weise kann die Rechnereinrichtung Vorgaben von außen empfangen, aufgrund derer das Energiesystem anzupassen ist, etwa wenn sich der Bedarf oder die äußeren Gegebenheiten ändern.

Die einzelnen Bestandteile der Rechnereinrichtung, insbesondere die Betriebsdatenerfassungseinrichtung, die Erzeugungseinrichtung und die Ausgabeeinrichtung, sind gemäß einer Ausführungsform Bestandteile eines Computerprogrammprodukts, etwa einer Software oder eines Algorithmus. Sie können jedoch auch in Form von Logik, Logikbausteinen oder dergleichen in der Rechnereinrichtung implementiert sein. Einzelne Einrichtungen können auch zu einer einzigen Einrichtung zusammengefasst sein. Das Computerprogrammprodukt umfasst gemäß einer Ausführungsform Befehle, die bei der Ausführung des Computerprogrammprodukts durch eine Rechnereinrichtung diese veranlassen, die Schritte des Verfahrens gemäß dem zweiten Aspekt der Erfindung auszuführen. Das Computerprogrammprodukt stellt insbesondere eine Software dar, die in eine Rechnereinrichtung, beispielsweise einen Speicher derselben, geladen, über ein Netzwerk übertragen oder auf einem Datenträger verbreitet werden kann.

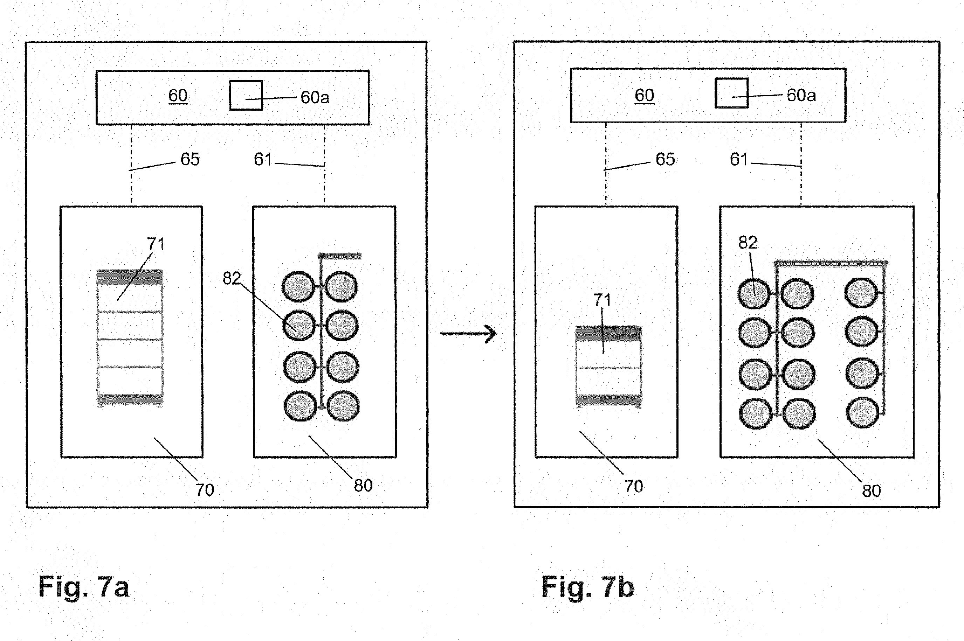

Durch das Verfahren kann ein Energiesystem initial zunächst konfiguriert werden, indem die einzelnen Komponenten des Energiesystems in vorgegebener Weise dimensioniert werden. Das kann an verschiedenen Stellen auch eine Überdimensionierung bedeuten. Im Betrieb des Energiesystems wird mittels der Steuereinrichtung oder Rechnereinrichtung überprüft, inwieweit die bestehende Dimensionierung der einzelnen Komponenten korrekt und geeignet ist. Ist dies nicht der Fall, erzeugt die Steuereinrichtung oder Rechnereinrichtung entsprechende Konfigurationsdaten, die dem Nutzer, beispielsweise über die Ausgabeeinrichtung, bereitgestellt werden. Darauf basierend kann das Energiesystem dann angepasst werden, beispielswiese indem einzelne Module einzelner Komponenten hinzugefügt oder entfernt werden. Der Ablauf dieses Verfahrens ist auch im Zusammenhang mit den Figuren 7a und 7b in der Figurenbeschreibung dargestellt und beschrieben, so dass an dieser Stelle auch auf diese Ausführungen Bezug genommen und verwiesen wird.

Bei der vorliegenden Erfindung müssen mindestens ein Kurzzeitspeicher und ein Langzeitspeicher vorliegen. Beide Speicher zeichnen sich durch eine flexible und variable Modularität aus, so dass es einfach möglich ist, diese in ihrer physikalischen Kapazität anzupassen. Dies umfasst die nahezu werkzeugfreie einfach zu handhabende Verbindung zu dem Gesamtsystem. Diese wird vorzugsweise in Form von Aufsteckmodulen und Einschubmodulen bei den Kurzzeitspeichern und einer einfachen dauerhaft technisch dichten Verbindungsart zu den Langzeitspeichern realisiert. Beide Speicher sind handlich in Gewicht und Größe, zum einfachen Transport zum Speichersystem.

Die Erfindung wird nun anhand verschiedener Ausführungsbeispiele unter Bezugnahme auf die beiliegenden Zeichnungen näher erläutert. Es zeigen
- Figur 1: in schematischer Ansicht ein Energiesystem, in dem die erfindungsgemäße Modularität realisiert ist;
- Figur 2: in schematischer Ansicht eine Lüftungseinrichtung, um die das Energiesystem erweitert wurde;
- Figur 3: in schematischer Ansicht den Grundaufbau einer Kurzzeitspeichereinrichtung des Energiesystems;
- Figuren 4a und 4b: in schematischer Ansicht den Grundaufbau einer Langzeitspeichereinrichtung des Energiesystems;
- Figur 5: in schematischer Ansicht den Grundaufbau eines Lüftungssystems, um das das Energiesystem erweitert wurde;
- Figur 6: in schematischer Ansicht eine weitere Ausführungsform eines Lüftungssystems, das in einem Energiesystem integriert ist; und
- Figuren 7a und 7b: in schematischer Ansicht den Verfahrensablauf einer modularen Anpassung des Energiesystems.

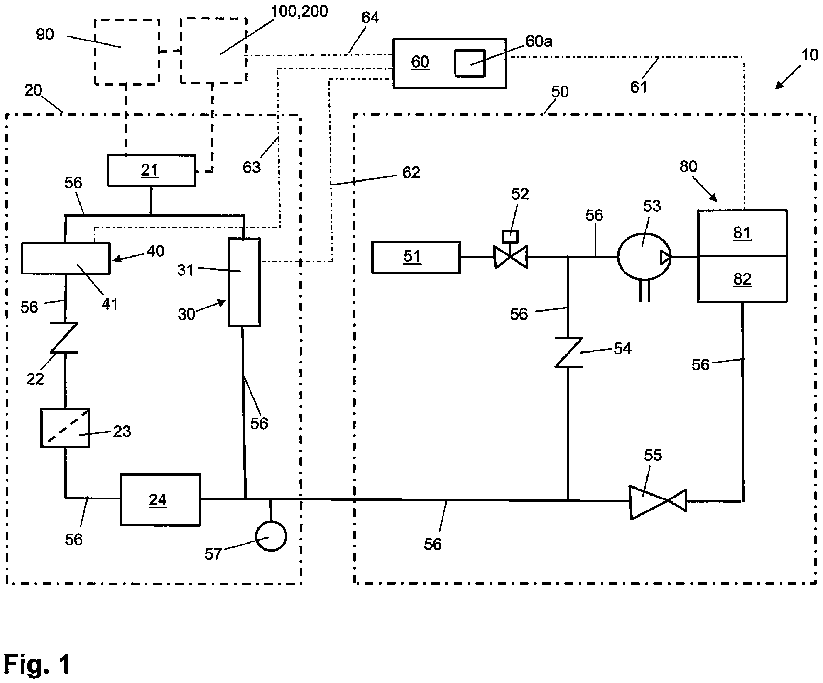

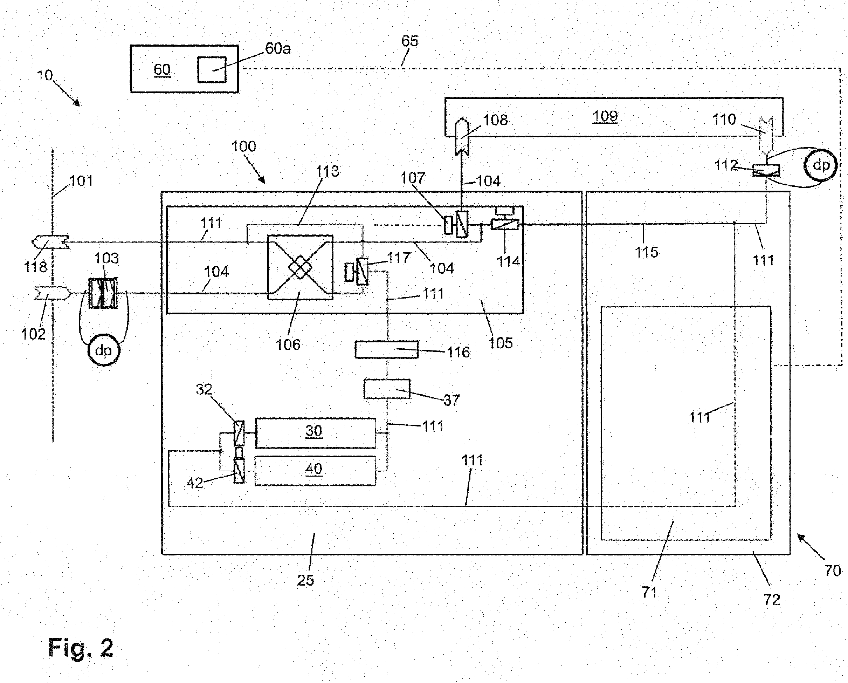

In den Figuren 1 und 2 wird zur Verdeutlichung des Hintergrunds der vorliegenden Erfindung und zur Realisierung der Erfindung in einem Energiesystem zunächst ganz allgemein ein Energiesystem 10 vorgestellt und beschrieben, in dem die erfindungsgemäße Modularität verwirklicht ist. In Figur 1 wird zunächst der grundsätzliche Aufbau eines solchen Energiesystems 10 beschrieben, wobei das Energiesystem 10 als Gebäudeenergiesystem eingesetzt wird. In Figur 2 ist zudem dargestellt, wie das Energiesystem 10 um eine geeignete Lüftungseinrichtung 42 ergänzt wird.

Gemäß Figur 1 weist das Energiesystem 10 zunächst ein erstes Untersystem 20 auf, welches als Innensystem ausgebildet ist. Das bedeutet, dass sich das erste Untersystem 20 innerhalb des Gebäudes befindet. Zusätzlich weist das Energiesystem 10 ein zweites Untersystem 50 in Form eines Außensystems auf. Das bedeutet, dass sich das zweite Untersystem 50 außerhalb des Gebäudes befindet.

Das erste Untersystem 20 weist eine Elektrolyseeinrichtung 40 zur Herstellung von Wasserstoff auf, die wenigstens ein Elektrolysemodul 41 aufweist. Zudem weist das erste Untersystem 20 eine Brennstoffzelleneinrichtung 30 auf, die wenigstens ein Brennstoffzellenmodul 31 aufweist.

Das zweite Untersystem 50 weist eine Langzeitspeichereinrichtung 80 auf, die zumindest eine Hochdruckspeichereinrichtung 81 aufweist. In der Hochdruckspeichereinrichtung 81 wird der erzeugte Wasserstoff bei bis zu 700 bar gespeichert. Darüber hinaus weist die Langzeitspeichereinrichtung 80 wenigstens ein Wasserstoff-Speichermodul 82 auf, welches beispielsweise als Metallhydridspeicher ausgebildet ist. Zusätzlich verfügt das zweite Untersystem 50 über eine Mitteldruckspeichereinrichtung 51, in der der erzeugte Wasserstoff bei Drücken zwischen 20 und 30 bar zwischengespeichert wird, bevor er von dort endgültig in der Hochdruckspeichereinrichtung 81 gespeichert wird.

Die einzelnen Komponenten des Energiesystems 10 sind über eine Verbindungsleitungseinrichtung 56 miteinander verbunden, die aus einer Anzahl unterschiedlicher Leitungsabschnitte besteht.

Zum Spülen der Elektrolyseeinrichtung 40 und/oder des Brennstoffzelleneinrichtung 30 ist eine Spüleinrichtung 21 mit einer Spülkammer vorgesehen, die über die Verbindungsleitungseinrichtung 56 mit den beiden vorgenannten Komponenten verbunden ist.

Der in der Elektrolyseeinrichtung 40 mittels Elektrolyse hergestellte Wasserstoff verlässt die Elektrolyseeinrichtung 40 über die Verbindungsleitungseinrichtung 56, in der sich in Strömungsrichtung des erzeugten Wasserstoffs eine Rückschlagventileinrichtung 22 sowie nachfolgend eine Filtereinrichtung 23 und eine Trocknereinrichtung 24 befinden, in denen der erzeugte Wasserstoff gefiltert und getrocknet wird. Die Filtereinrichtung 23 und die Trocknereinrichtung 24 können sich alternativ auch im zweiten Untersystem 50 befinden.

Von der Trocknereinrichtung 24 strömt der erzeugte Wasserstoff über die Verbindungsleitungseinrichtung 56 zu einer weiteren Rückschlagventileinrichtung 54. Von dort strömt der erzeugte Wasserstoff in den Mitteldruckspeicher 51, welcher über eine Ventileinrichtung 52, die insbesondere als Sperrventil, beispielsweise in Form eines Magnetventils, ausgebildet ist, an der Verbindungsleitungseinrichtung 56 angebunden ist. In dem Leitungsabschnitt, der in der Langzeitspeichereinrichtung 80, insbesondere in der Hochdruckspeichereinrichtung 81 endet, befindet sich vor der Hochdruckspeichereinrichtung 81 eine Kompressoreinrichtung 53, insbesondere in Form eines Kolbenkompressors. Über die Kompressoreinrichtung 53 wird der erzeugte Wasserstoff zumindest in die Hochdruckspeichereinrichtung 81 eingespeichert. Der in der Mitteldruckspeichereinrichtung 51 zwischengespeicherte Wasserstoff wird unter Betätigung der Kompressoreinrichtung 53 in der Hochdruckspeichereinrichtung 81 eingespeichert.

Dieser Herstellungsvorgang des Wasserstoffs bis hin zu dessen Einspeicherung in der Langzeitspeichereinrichtung 80 stellt eine erste Betriebsweise des Energiesystems 10 dar. Bei dieser ersten Betriebsweise des Energiesystems 10 herrscht in den Leitungsabschnitten der Verbindungsleitungseinrichtung 40 ein Druck von 20 bis 60 bar. Ein solcher Druck herrscht auch im Mitteldruckspeicher 51. Über die Kompressoreinrichtung 53 wird der aus der Mitteldruckspeichereinrichtung 51, bei der es sich um einen Zwischenspeicher handelt, entnommene Wasserstoff so weit komprimiert, dass er mit Drücken von bis zu 700 bar in der Hochdruckspeichereinrichtung 81 eingespeichert werden kann.

Der in der Hochdruckspeichereinrichtung 81 gespeicherte Wasserstoff wird für den Betrieb der Brennstoffzelleneinrichtung 30 verwendet. Der Betrieb der Brennstoffzelleneinrichtung 30 erfolgt in der zweiten Betriebsweise des Energiesystems 10. Die Brennstoffzellenmodule 31 können aber nur bei Drücken kleiner 20 bar arbeiten. In der zweiten Betriebsweise des Energiesystems 10 wird der Wassersoff über die Verbindungsleitungseinrichtung 56 aus der Hochdruckspeichereinrichtung 81 entnommen, über eine Entspannungseinrichtung 55 in Form eines Druckminderers auf den erforderlichen Druck entspannt und in die Brennstoffzelleneinrichtung 30 transportiert. Zur Messung des Drucks ist wenigstes eine Druckmesseinrichtung 57, beispielsweise in Form eines Drucksensors vorgesehen.

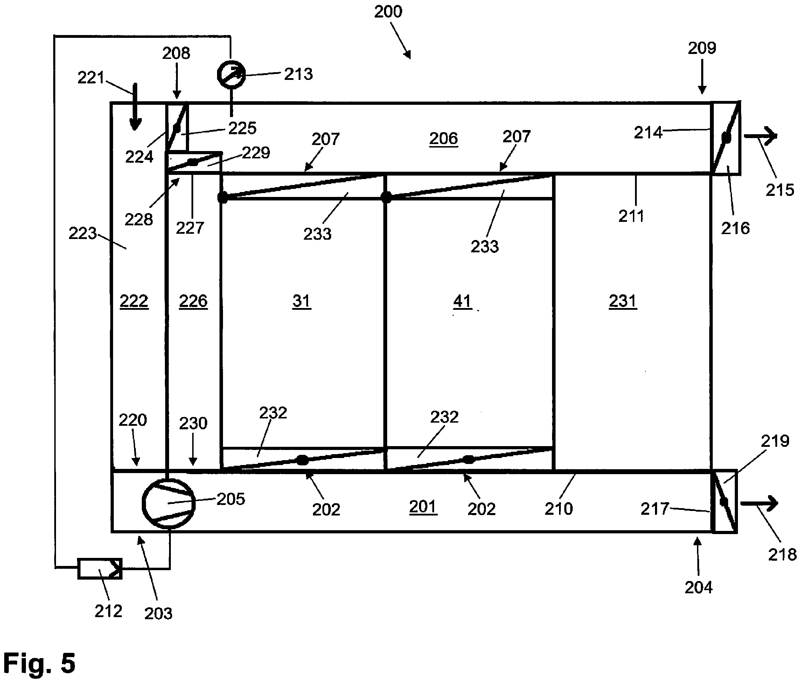

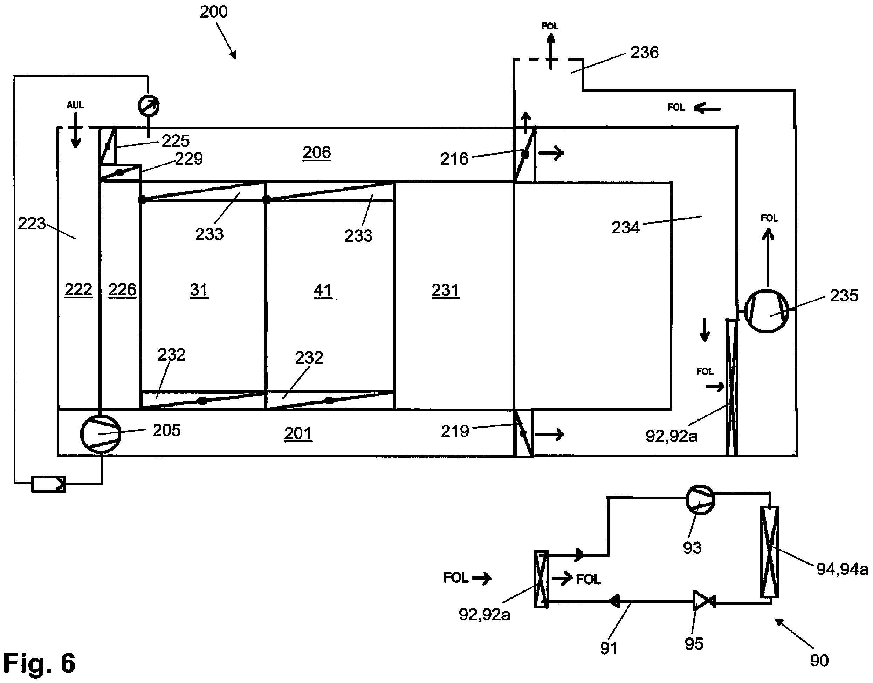

Das in Figur 1 dargestellte Energiesystem 10 kann um eine Lüftungseinrichtung 100 erweitert werden, die in Figur 2 dargestellt ist, und/oder um ein Lüftungssystem 200, das in den Figuren 5 und 6 dargestellt ist. Zudem kann das Energiesystem 10 um eine Wärmepumpeneinrichtung 90 erweitert werden, die in Figur 6 dargestellt ist.

Zudem verfügt das Energiesystem 10 über eine Steuereinrichtung 60, mittels derer die einzelnen Komponenten des Energiesystems 10 gesteuert werden und/oder Betriebsdaten der einzelnen Komponenten des Energiesystems 10, insbesondere der einzelnen Module des Energiesystems 10, erfasst und/oder erzeugt und/oder verarbeitet werden. Die Steuereinrichtung 60 verfügt über eine Rechnereinrichtung 60a. Die Steuereinrichtung 60 ist beispielsweise über geeignete Schnittstellen 61, 62, 63, 64 mit der Langzeitspeichereinrichtung 80, der Brennstoffzelleneinrichtung 30, der Elektrolyseeinrichtung 40, und der Lüftungseinrichtung 100 beziehungsweise dem Lüftungssystem 200 verbunden.

Das in Figur 1 dargestellte Energiesystem 10 stellt einen Teilbereich eines Gesamt-Gebäudeenergiesystems dar, bei dem es sich um ein elektrisch autarkes und vollständig auf erneuerbaren Energien beruhendes multihybrides Gebäudeenergiespeichersystem handelt.

Das multihybride Gebäudeenergiespeichersystem ermöglicht es, die von einer Photovoltaik (PV)-Anlage, einer Kleinwindkraftanlage oder dergleichen erzeugte elektrische Energie bedarfsgesteuert auf das gesamte Jahr zu verteilen. Dabei kann das System als Inselsystem unabhängig vom elektrischen Netz oder aber bei Netzausfällen als Ersatzstromversorgung betrieben werden. Die Anlage kann auch die elektrische Autarkie des Gebäudes gewährleisten, sodass über das ganze Jahr hinweg keine elektrische Energie aus dem Stromnetz bezogen werden muss.

Die primäre Aufgabe des Gebäudeenergiesystems ist es, die gewonnene elektrische Energie aus Photovoltaik (PV)-Modulen oder dergleichen dem Verbraucher im Gebäude verfügbar zu machen. Sekundär können bei Zeiten niedriger Last oder hoher Einstrahlung elektrische Energieüberschüsse in einem Batterie-Kurzzeit-Speicher zwischengespeichert werden. Tertiär kann im Wasserstoff-Langzeit-Speicher die elektrische Energie als gasförmiger Wasserstoff für Zeiten niedriger Einstrahlung wie Nacht, Winter oder dergleichen mittel- bis langfristig gespeichert und mittels Brennstoffzelle wieder jederzeit bedarfsgerecht zur Verfügung gestellt werden.

Neben energietechnischen Aufgaben fungiert das System auch als kontrollierte Raumlüftung durch eine verbaute Lüftungseinrichtung 42, die in Figur 2 dargestellt ist. Bei Brennstoffzellenbetrieb kann die Abwärme des Brennstoffzellenmoduls über die kontrollierte Raumlüftung direkt als Wärme an die Frischluft und damit an die Räume abgegeben werden.

Der im Elektrolysemodul produzierte Wasserstoff fließt über die Wasserstoffleitung in die außenaufgestellte Druckspeicheranlage.

Bei fehlender oder nicht ausreichender PV-Energie wird Energie aus der Batterie zur Deckung der Verbraucherlast entnommen. Reicht die im Kurzzeitspeicher vorrätige Energie nicht aus, kann das Brennstoffzellenmodul den zusätzlichen elektrischen Energiebedarf decken. Im Brennstoffzellenbetrieb fließt der Wasserstoff über die Wasserstoffleitung aus der Druckspeicheranlage zum Brennstoffzellenmodul.

Ein zeitgleicher Betrieb von Brennstoffzellenmodul und Elektrolysemodul ist aus Effizienzgründen strikt auszuschließen. Das gesamte System wird über ein zentrales elektronisches Steuergerät, den "Energy Manager" mit einem prädiktiven Energiemanagement derart gesteuert, dass übers Jahr gesehen der Nutzungsgrad der regenerativen Energie, z.B. PV-Energie und/oder Windenergie, bei minimaler Größe der installierten Energiewandler und Energiespeicher optimiert wird.

Das zweite Untersystem ist prinzipiell für den Betrieb im Außenbereich vorgesehen, kann aber unter bestimmten Bedingungen auch innerhalb eines speziellen Bereichs des Gebäudes errichtet und betrieben werden.

Das Energiesystem 10 kann zur effektiven Nutzung einzelner Komponenten oder zur Weiterverwertung einzelner Prozessprodukte mit anderen Systemen oder Teilsystemen verbunden sein.

In der Figur 2 ist in stark vereinfachter Weise eine Lüftungseinrichtung 100 dargestellt, welche ein Bestandteil des Energiesystems 10 ist. Die Lüftungseinrichtung 100 dient zum Einstellen eines gewünschten Raumklimas in wenigstens einem Raum, beispielsweise einem Aufenthaltsraum in einem Gebäude. Neben der Darstellung in den Figuren 1 und 2 können die Lüftungseinrichtung 100 und das Energiesystem 10, bei denen es sich jeweils um komplexe Systeme handelt, natürlich noch weitere Systemkomponenten aufweisen, wie beispielsweise eine Wärmepumpe, die aber der Übersichtlichkeit halber in den Figuren 1 und 2 nicht explizit dargestellt sind.

Die Lüftungseinrichtung 100 befindet sich innerhalb des Gebäudes, von dem schematisch nur eine Gebäudewand 101 dargestellt ist.

Zur Erzeugung von Energie weist das Energiesystem 10 zunächst eine Elektrolyseeinrichtung 40 auf, mittels derer Wasserstoff erzeugt wird. Dieser Wasserstoff wird in einer Brennstoffzelleneirichtung 30 verbraucht, mit welcher elektrischer Strom erzeugt wird. Zudem verfügt das Energiesystem 10 über die Lüftungseinrichtung 100. Die vorgenannten Systembestandteile sind beispielsweise in einem Systemschrank 25 untergebracht.

Zur Kurzzeitspeicherung elektrischer Energie ist weiterhin eine Kurzzeitspeichereinrichtung 70 vorgesehen. Wenigstens ein Energie-Speichermodul 71 der Kurzzeitspeichereinrichtung 70, welches vorzugsweise als Batteriemodul ausgebildet ist, befindet sich in einer Schrankeinrichtung 72 der Kurzzeitspeichereinrichtung 70. Über eine Schnittstelle 65 ist die Kurzzeitspeichereinrichtung 70 mit der Steuereinrichtung 60 mit Rechnereinrichtung 60a verbunden.

Ein Bauteil der Lüftungseinrichtung 100 wird durch eine Lüftungskomponente 105 gebildet, in der sich ein Wärmetauscher 106 in Form eines Kreuzstromwärmetauschers befindet. Außenluft von außerhalb des Hauses wird über eine Außenluftzufuhr 102 in Form eines Zuluftstroms 104 in die Lüftungseinrichtung 100 eingeführt und über den Wärmetauscher 106 geführt. In dem Zuluftstrom 104 ist in Strömungsrichtung hinter der Außenluftzufuhr 102 eine Außenluft-Filtereinrichtung 103 angeordnet.

Nach Verlassen des Wärmetauschers 106 wird der Zuluftstrom 104 über eine Einrichtung 107 zur Einstellung des Zuluftstroms, welche als Zuluftklappe oder als Zuluft-Ventileinrichtung ausgebildet sein kann, über eine Zuluftzufuhr 108 in eine in einem Raum befindliche Lüftungsanlage 109 eingebracht. Über die Einrichtung 107 zur Einstellung des Zuluftstroms kann die in die Lüftungsanlage 109 eintretende Zuluft mengenmäßig eingestellt werden. Ist die Einrichtung 107 zur Einstellung des Zuluftstroms komplett geschlossen, kann keine Zuluft in die Lüftungsanlage 109 und damit in den Raum eintreten. Ist die Einrichtung 107 hingegen vollständig geöffnet, tritt ein Maximum an Zuluft über die Zuluftzufuhr 108 in die Lüftungsanlage 109 ein. Um eine für den Nutzer geeignete Regelungsmöglichkeit der Zuluft zu schaffen, ist weiterhin eine Bypasseinrichtung 114 vorgesehen, welche als Bypassklappe oder Bypass-Ventileinrichtung ausgebildet sein kann. Über diese Bypasseinrichtung 114 kann wahlweise zumindest ein gewisser Mengenanteil der Zuluft aus der Zuluftzufuhr 108 abgezweigt und an der Lüftungsanlage 109 vorbeigeführt werden.

Aus dem Raum über die Lüftungsanlage 109 austretende Abluft wird über eine Abluftabfuhr 110 in Form eines Abluftstroms 111 abgeführt. Hinter der Abluftabfuhr 110 ist im Abluftstrom 111 eine Abluft-Filtereinrichtung 112 angeordnet.

Der Abluftstrom 111 wird weiter durch die Kurzzeitspeichereinrichtung 70 geleitet, wo er Wärme aus den Energie-Speichermodulen 71 aufnehmen kann. Danach kann der Abluftstrom 11, über entsprechende Klappen 32, 42, oder Ventileinrichtungen gesteuert, wahlweise durch die Elektrolyseeinrichtung 40 und/oder die Brennstoffzelleneinrichtung 30 geführt werden, und anschließend noch über ein Spülsystem 37 für die Elektrolyseeinrichtung 40 und/oder die Brennstoffzelleneinrichtung 30, sowie noch über eine Kühleinrichtung 116, bevor der Abluftstrom 111 wieder in die Lüftungskomponente 105 der Lüftungseinrichtung 100 eintritt.

Dort wird der Abluftstrom 111 wieder über den Wärmetauscher 106 geführt, wo er seine gespeicherte Wärme an den Zuluftstrom 104 übertragen kann. Je nach Betriebsweise und Ausgangslage kann der Abluftstrom 111 aber auch am Wärmetauscher 106 vorbei geleitet werden. Dies geschieht mittels einer Bypasseinrichtung 117, die beispielsweise als Bypassklappe oder Bypass-Ventileinrichtung ausgebildet ist. Bei einer entsprechenden Betätigung der Bypasseinrichtung 117 kann der Abluftstrom 111 über einen Abluftbypassstrom 113 an dem Wärmetauscher 106 vorbei geleitet werden. Verlassen tut der Abluftstrom 111 die Lüftungseinrichtung 100 über eine Fortluftabfuhr 118, über die der Abluftvolumenstrom 111 in Form eines Fortluftstroms das Haus wieder verlässt.

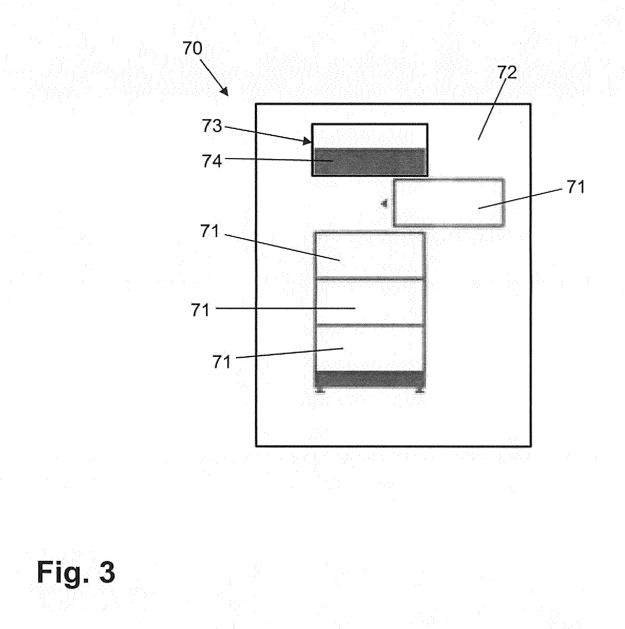

In Figur 3 ist die Kurzzeitspeichereinrichtung 70 in größerem Detail dargestellt. Die Kurzzeitspeichereinrichtung 70 dient zum zeitweiligen Speichern von elektrischer Energie. Dazu weist die Kurzzeitspeichereinrichtung 70 eine Anzahl von Energie-Speichermodulen 71 auf, bei denen es sich bevorzugt um Batteriemodule handelt. Die Energie-Speichermodule 71 sind lösbar in einer Schrankeinrichtung 72 angeordnet, beispielsweise in Form von Einschubmodulen. Verbunden sind die Energie-Speichermodule 71 mit einem Managementmodul 73, in welchem sich die erforderliche Leistungselektronik 74 befindet. Auch mit dem Managementmodul 73 sind die einzelnen Energie-Speichermodule 71 lösbar verbunden. Auf diese Weise wird es möglich, wie weiter unten in Bezug auf die Figuren 7a und 7b beschrieben ist, die Anzahl der Energie-Speichermodule 71 an die vorherrschenden und sich gegebenenfalls ändernden Gegebenheiten anzupassen. Die einzelnen Energie-Speichermodule 71 können einfach installiert werden, vorzugsweise werkzeuglos, vorzugsweise ohne Kabel, und zahlenmäßig einfach erweitert oder reduziert werden.

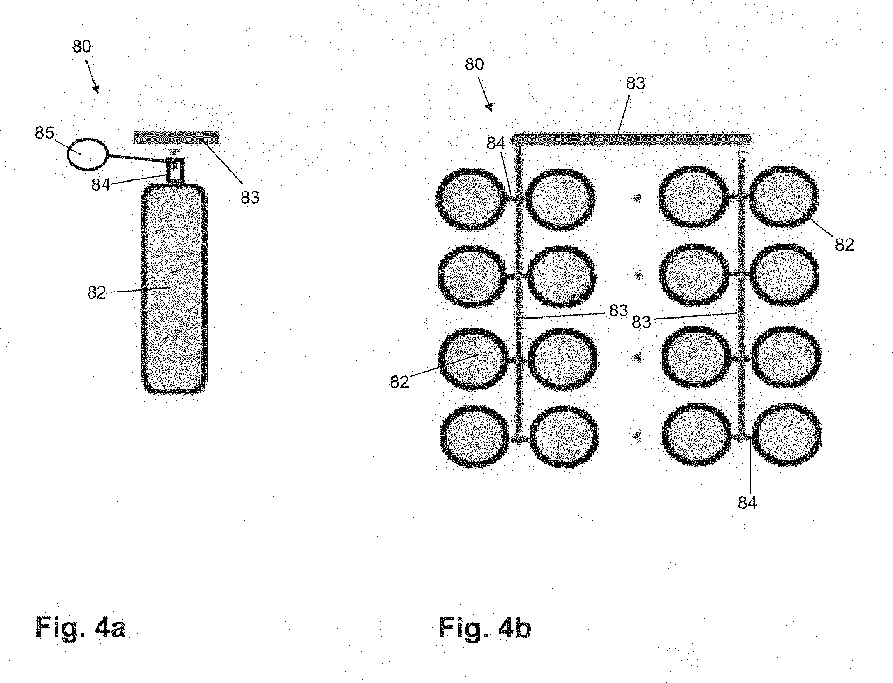

In den Figuren 4a und 4b ist die in Figur 1 schematisch dargestellte Langzeitspeichereinrichtung 80 in größerem Detail dargestellt. Wie aus Figur 4a ersichtlich ist, weist die Langzeitspeichereinrichtung 80 eines oder mehrere Wasserstoff-Speichermodule 82 auf. Hierbei handelt es sich beispielsweise um Metallhydridspeicher, bestehend aus einem Druckbehälter, in dem sich eine Metallhydridmasse befindet. Um auf einfache Weise eine modulare Anpassung der Langzeitspeichereinrichtung 80 realisieren zu können, sind die einzelnen Wasserstoff-Speichermodule 82 über entsprechende Verbindungselemente 84 an einer Verbindungseinrichtung 83, bei der es sich beispielsweise um eine Verbindungsleitung, gegebenenfalls ergänzt um wenigstens eine Ventileinrichtung, handelt. Die Verbindungselemente 84 sind insbesondere als dauerhaft technisch dichtes Verbindungselement, als Schnellkupplungsverbindungselement, als Schraubverbindungselement, als Klemmringverbindungselement oder als konisches Rohrdichtungsverbindungselement ausgebildet. Zur Überprüfung der Dichtigkeit ist eine Einrichtung 85 zur Dichtigkeitsmessung vorgesehen. In Figur 4b ist eine Langzeitspeichereinrichtung 80 dargestellt, die insgesamt 16 Wasserstoff-Speichermodule 82 aufweist. Je nach Bedarf kann die Anzahl der Wasserstoff-Speichermodule 82 leicht angepasst werden, indem beispielsweise weitere Wassersartoff-Speichermodule 82 an der Verbindungseinrichtung 83 angeordnet oder von dieser entfernt werden.

Um auch die Brennstoffzelleneinrichtung 30 und die Elektrolyseeinrichtung 40 durch Veränderung der Anzahl der entsprechenden Brennstoffzellenmodule 31 und Elektrolysemodule 41 modular anpassen zu können, ist dem Energiesystem 10 ein entsprechend ausgebildetes Lüftungssystem 200 zugeordnet.

Im Zusammenhang mit Figur 5 wird zunächst der grundsätzliche Aufbau eines solchen Lüftungssystems 200 beschrieben, welches zum Zwecke eines modularen Aufbaus mit anderen Komponenten beziehungsweise Modulen des Energiesystems in Verbindung steht und/oder aus einzelnen Modulen besteht. In Figur 3 sind zwei Abwärme-generierende Module dargestellt, wobei es sich bei einem Modul um das Brennstoffzellenmodul 31, und bei dem zweiten Modul um das Elektrolysemodul 41 handelt, wie auch aus Figur 1 ersichtlich. Weiterhin ist ein Nicht-Wärme-generierendes Modul 231 angedeutet, bei dem es sich beispielsweise um ein Modul zur Aufbereitung und Bereitstellung von demineralisiertem Wasser handelt.

Das Lüftungssystem 200 weist zunächst einen Luftverteilungskanal 201 auf, bei dem es sich ebenfalls um ein Modul handeln kann, in dem im Bereich eines ersten Endes 203 ein zentrales Gebläse 205 angeordnet ist. In der Seitenwandung 210 des Luftverteilungskanals 201 sind Verteilungsöffnungen 202 ausgebildet, wobei jeweils eine Verteilungsöffnung 202 mit dem Eingang des Brennstoffzellenmoduls 31 und des Elektrolysemoduls 41 korrespondiert. Gegebenenfalls gilt dies auch für das Nicht-Abwärme-generierendes Modul 231, aber nur, wenn dieses, beispielsweise zu Kühlzwecken, von Luft durchströmt werden soll. Verschließbar sind die Verteilungsöffnungen 202 über entsprechende Vorrichtungen 232 zum Öffnen und/oder Schließen der Verteilungsöffnungen 202, die im gezeigten Beispiel als Motor-getriebene Klappen ausgebildet sind. Am zweiten Ende 204 des Luftverteilungskanals 201 befindet sich eine Luftausgangsöffnung 217, die zur direkten Abfuhr 218 von Luft aus dem Luftverteilungskanal 201 dient, und die mittels einer Vorrichtung 219 zum Öffnen und/oder Schließen der Luftaustrittsöffnung, beispielsweise in Form einer Motor-getriebenen Klappe, versehen ist.

Im Bereich des ersten Endes 203 des Luftverteilungskanals 201 ist dieser über eine Lufteingangsöffnung 220 mit einem Luftzufuhrkanal 222 verbunden. Für das Lüftungssystem 200 bereitgestellte Luft, bei der es sich beispielsweise um Außenluft, Abluft aus anderen Prozessen oder dergleichen handelt, wird als Zufuhr 221 von Luft in den Luftzufuhrkanal 222 eingeführt und tritt über die Lufteingangsöffnung 220 in den Luftverteilungskanal 201 ein. Bei entsprechend geöffneten Vorrichtungen 232 zum Öffnen und/oder Schließen der Verteilungsöffnungen 202 strömt die Luft, unterstützt durch das Gebläse 205, anschließend über die Verteilungsöffnungen 202 in die Module 31, 41.

Ausgangsseitig sind das Brennstoffzellenmodul 31 und das Elektrolysemodul 41, und gegebenenfalls das Nicht-Abwärme-generierende Modul 231, mit einem Luftsammelkanal 206 verbunden. In dessen Seitenwandung 211 befinden sich zu den Modulen 31, 41 korrespondierende Sammelöffnungen 207. Die die Module 31, 41 durchströmende Luft nimmt in den Modulen entstehende Abwärme auf und transportiert diese Modulausgangsseitig über die Sammelöffnungen 207 in den Luftsammelkanal 206 ab. Verschließbar sind die Sammelöffnungen 207 über entsprechende Vorrichtungen 233 zum Öffnen und/oder Schließen der Sammelöffnungen, die im gezeigten Beispiel als Rückschlagklappen ausgebildet sind.

Der Luftsammelkanal 206 weist ein erstes Ende 208 und ein zweites Ende 209 auf. Am zweiten Ende 209 befindet sich eine zweite Luftausgangsöffnung 214, über die eine Abfuhr 215 von Luft und/oder Abwärme aus dem Sammelkanal 206 erfolgt, hin zu anderen Komponenten des Energiesystems zur dortigen weiteren Verwendung. Verschlossen werden kann die zweite Luftausgangsöffnung 214 über eine zweite Vorrichtung 216 zum Öffnen und/oder Schließen der zweiten Luftausgangsöffnung 214, die beispielsweise als Motor-getriebene Klappe ausgebildet ist.

Am ersten Ende 208 des Luftsammelkanals 206 befindet sich eine erste Luftausgangsöffnung 224, über die der Luftsammelkanal 206 mit einem Luftrezirkulationskanal 223 verbunden ist. Über diesen Luftrezirkulationskanal 223 kann Luft und Abwärme aus dem Luftsammelkanal 206 zur Vorwärmung der für den Luftverteilungskanal 201 vorgesehenen Zufuhr 221 von Luft genutzt werden. Verschließbar ist die erste Luftausgangsöffnung 224 des Luftsammelkanals 206 über eine erste Vorrichtung 225 zum Öffnen und/oder Schließen der ersten Luftausgangsöffnung 224, die beispielsweise als Motor-getriebene Klappe ausgebildet ist. Der Luftrezirkulationskanal 223 kann entweder durch den Luftzufuhrkanal 222 bereitgestellt werden, oder unabhängig von diesem ausgebildet sein und beispielsweise parallel zu diesem geführt sein. Mithilfe der Rezirkulation der aus den Modulen 31, 41 in den Sammelkanal 206 transportierten Abwärme kann ein nahezu frostfreier Betrieb sichergestellt werden. Dabei wird die warme Luft hinter den Modulen 31, 41 rezirkuliert und so die Eintrittstemperatur vor den Modulen, beispielsweise auf mindestens vier Grad, angehoben.

Weiterhin ist im Bereich des ersten Endes 208 des Luftsammelkanals 206 ein Zweitluftkanal 226 realisiert, der über eine dritte Luftausgangsöffnung 224 mit dem Luftsammelkanal 206 verbunden ist. Verschlossen werden kann die dritte Luftausgangsöffnung 227 an der Eingangsseite 228 des Zweitluftkanals 226 mit einer dritten Vorrichtung 229 zum Öffnen und/oder Schließen der dritten Luftausgangsöffnung 227, die beispielsweise als Motor-getriebene Klappe ausgebildet ist. An der Ausgangsseite 230 des Zweitluftkanals 226 mündet dieser in den Luftverteilungskanal 201.

Um das Gebläse 205 in geeigneter Weise steuern zu können, damit genügend Luft den Sammelkanal 206 erreicht, ist eine Steuereinrichtung 212 vorgesehen, die zum einen mit dem Gebläse 205, und zum anderen mit einer dem Sammelkanal 206 zugeordneten Druckmesseinrichtung 213, beispielsweise in Form eines Drucksensorelements, verbunden ist.

Die Anzahl der Verteilungsöffnungen 202 und der Sammelöffnungen 207 entspricht der Anzahl der Module 31, 41, 231, die mit dem Luftverteilungskanal 201 und dem Luftsammelkanal 206 verbunden werden können. Um eine modulare Erweiterung durch Hinzufügen einzelner Module zu ermöglichen, sind der Luftverteilungskanal 201 und der Luftsammelkanal 206 längenveränderlich ausgebildet. Beispielsweise sind der Luftverteilungskanal 201 und der Luftsammelkanal 206 aus einer Anzahl wahlweise miteinander verbindbarer Kanalelemente gebildet. Die einzelnen Kanalelemente werden in geeigneter Weise miteinander verbunden, beispielsweise ineinandergesteckt, über Verbindungsstücke miteinander verbunden, oder dergleichen. Jedes Kanalelement verfügt dabei vorzugsweise über wenigstens eine Verteilungsöffnung 202 beziehungsweise Sammelöffnung 207. In anderer Ausgestaltung sind der Luftverteilungskanal 201 und der Luftsammelkanal 206 teleskopartig ausziehbar. Bei einer solchen längenveränderlichen Ausgestaltung wird die Länge der Kanäle auf die Anzahl der angeschlossenen Module angepasst. Bei einer modulartigen Erweiterung werden die Kanäle entsprechend verlängert, bei einer Reduzierung von Modulen entsprechend verkürzt.

Figur 6 zeigt ein Ausführungsbeispiel, bei dem das Lüftungssystem 200 mit einer Wärmepumpeneinrichtung 90 verbunden ist, die in Form einer (Ab-)Luft-Wärmepumpe ausgebildet ist. Außenluft, AUL, wird in der wie in Figur 5 beschrieben Weise durch das Lüftungssystem 200 geleitet und wird anschließend über eine Leitung 234 einem ersten Wärmetauscher 92a zugeführt, der als Fortluftwärmetauscher ausgebildet ist, und der die Funktion eines Verdampfers 92 in einem Kreislauf 91 der Wärmepumpeneinrichtung 90 übernimmt. Ein Kompressor 93 übernimmt die Funktion einer Kältemaschine, und ein weiterer Wärmetauscher 94a fungiert als Kondensator 94, der beispielsweise mit einem Warmwasserspeicher zusammenwirkt. Nach dem Wärmetauscher 94a wird das den Kreislauf 91 durchströmende Medium, das zuvor mittels des Kompressors 93 verdichtet wurde, mittels einer Expandiervorrichtung 95, die ebenfalls einen Bestandteil der Kältemaschine darstellt, wieder expandiert, bevor das Medium erneut dem ersten Wärmetauscher 92a zugeführt wird.

In einem Betriebszustand kann der erste Wärmetauscher 92a beispielsweise mittels Fortluft, FOL, beströmt werden, um die Wärmepumpenfunktion zu aktivieren. Die Fortluft kann anschließend über ein Gebläse 235 einer Fortluftabfuhr 236 zugeführt werden. Zusätzlich kann dieser Fortluft, FOL, bei Bedarf nunmehr auch noch Luft mit Abwärme aus den Modulen 31, 41, 231 aus dem Sammelkanal 206 zugemischt werden, und zwar vor dem ersten Wärmetauscher 92a.

Vor der ersten Inbetriebnahme des Energiesystems 10 werden die einzelnen Komponenten, insbesondere die Kurzzeitspeichereinrichtung 70 und die Langzeitspeichereinrichtung 80 in der Regel vorkonfiguriert. Dies ist in Figur 7a dargestellt. Hierbei handelt es sich beispielsweise um einen Auslieferungszustand des Energiesystems. Dabei kann es vorkommen, dass beispielsweise die Kurzzeitspeichereinrichtung 70 zu groß dimensioniert ist, sprich zu viele Energie-Speichermodule aufweist. In ähnlicher Weise kann auch die Langzeitspeichereinrichtung 80 falsch dimensioniert sein, etwa, indem diese zu wenige Wasserstoff-Speichermodule 82 aufweist.

Für einen nachhaltigen Betrieb ist es jedoch wünschenswert, Langzeitspeicher in ihrer Kapazität so zu dimensionieren, dass ökonomische Synergieeffekte aus Wahl der Kurzzeitspeicherkapazität und der Langzeitkapazität entstehen. Modulare Batteriespeicher haben ihr ökonomisches Optimum, wenn Sie auf die notwendige Entladekapazität ausgelegt werden.

Durch die erfindungsgemäße Modularität ist es nun möglich, eine zu Beginn realisierte Auslegung des Energiesystems später zu verändern und anzupassen. Ebenso ist es möglich, bei sich ändernden Gegebenheiten das System entsprechend anzupassen.

In Figur 7a ist eine initial individuelle Auslegung dargestellt. Beispielsweise verfügt die Kurzzeitspeichereinrichtung 70 zunächst über vier Energie-Speichermodule 71. Die Langzeitspeichereinrichtung 80 verfügt zunächst über acht Wasserstoff-Speichermodule 82. Auslegungstools oder Messdaten geben beispielsweise den Bedarf an der Größe des Kurzzeit- und des Langzeitspeichers vor. Initial wird das Energiesystem aufgebaut und in Betrieb genommen. Ist kein Netzanschluss vorhanden, dann ist eine Überdimensionierung oft notwendig. Dies ist aber meist nicht ökonomisch und damit nicht nachhaltig,

In der Rechnereinrichtung 60a der Steuereinrichtung 60 werden die Betriebsdaten der Kurzzeitspeichereinrichtung 70 und der Langzeitspeichereinrichtung 80 erfasst und/oder erzeugt und/oder verarbeitet. Daraus wird dann abgeleitet, ob und wenn ja in welchem Umfang das Energiesystem, beziehungsweise die einzelnen Komponenten des Energiesystems, angepasst werden müssen, beispielsweise durch Vergleich mit entsprechenden Vorgaben oder Vergleichsdaten.

Nach einigen Wochen Betrieb oder spätestens nach einem kompletten Jahr mit allen Jahreszeiten, beispielsweise liegen die wahren, realen Speicherbedürfnisse vor. Bei der obigen flexiblen Lösung kann diese Anpassung einfach und individuell durchgeführt werden. Dies ist in Figur 7b gezeigt. Die Anpassung führte in dem gezeigten Beispiel dazu, dass die Anzahl der Energie-Speichermodule 71 auf zwei reduziert wurde, während die Anzahl der Wasserstoff-Speichermodule 82 auf zwölf erhöht wurde.

Eine entsprechend flexible Anpassung kann beispielsweise auch vorgenommen werden, wenn sich die Verbräuche ändern, wenn beispielsweis eine Strom erzeugende PV-Anlage vergrößert wird, wenn beispielsweise erweiterte Versorgungswünsche auftreten, und dergleichen.

Durch das modular aufgebaute Energiesystem 10 wird es stets auf einfache Weise möglich, die einzelnen Komponenten des Energiesystem 10 an die sich ändernden Bedingungen anzupassen, indem, insbesondere aufeinander abgestimmt, die einzelnen Module des Energiesystems angepasst werden, beispielswiese, indem diese erweitert oder reduziert werden. Dies ist nachhaltig und schützt die Umwelt.

### Bezugszeichenliste

- 10: Energiesystem (Gebäudeenergiesystem)

- 20: Erstes Untersystem (Innensystem)
- 21: Spüleinrichtung (Spülkammer)
- 22: Rückschlagventileinrichtung
- 23: Filtereinrichtung
- 24: Trocknereinrichtung
- 25: Systemschrank

- 30: Brennstoffzelleneinrichtung
- 31: Brennstoffzellenmodul
- 32: Brennstoffzellenmodulklappe

- 40: Elektrolyseeinrichtung
- 41: Elektrolysemodul
- 42: Elektrolysemodulklappe

- 50: Zweites Untersystem (Außensystem)
- 51: Mitteldruckspeichereinrichtung
- 52: Ventileinrichtung
- 53: Kompressoreinrichtung
- 54: Rückschlagventileinrichtung
- 55: Entspannungsvorrichtung (Druckminderer)
- 56: Verbindungsleitungseinrichtung
- 57: Druckmessvorrichtung

- 60: Steuereinrichtung
- 60a: Rechnereinrichtung
- 61: Schnittstelle
- 62: Schnittstelle
- 63: Schnittstelle
- 64: Schnittstelle
- 65: Schnittstelle

- 70: Kurzzeitspeichereinrichtung
- 71: Energie-Speichermodul
- 72: Schrankeinrichtung
- 73: Managementmodul
- 74: Leistungselektronik
- 80: Langzeitspeichereinrichtung
- 81: Hochdruckspeichereinrichtung
- 82: Wasserstoff-Speichermodul
- 83: Verbindungseinrichtung
- 84: Verbindungselement
- 85: Einrichtung zur Dichtigkeitsmessung

- 90: Wärmepumpeneinrichtung
- 91: Kreislauf der Wärmepumpeneinrichtung
- 92: Verdampfer
- 92a: Erster Wärmetauscher (Fortluftwärmetauscher)
- 93: Kompressor
- 94: Kondensator
- 94a: Dritter Wärmetauscher (Heizung und/oder Warmwasser)
- 95: Expandiervorrichtung

- 100: Lüftungseinrichtung
- 101: Gebäudewand
- 102: Außenluft-Zufuhr
- 103: Außenluft-Filtereinrichtung
- 104: Zuluftstrom
- 105: Lüftungskomponente
- 106: Wärmetauscher (Kreuzstromwärmetauscher)
- 107: Einrichtung zur Einstellung des Zuluftstroms (Zuluftklappe)
- 108: Zuluftzufuhr
- 109: Lüftungsanlage
- 110: Abluftabfuhr
- 111: Abluftstrom
- 112: Abluft-Filtereinrichtung
- 113: Abluftbypassstrom
- 114: Bypasseinrichtung
- 115: Bypassstrom
- 116: Kühlereinrichtung
- 117: Bypasseinrichtung
- 118: Fortluftabfuhr
- 200: Lüftungssystem
- 201: Luftverteilungskanal
- 202: Verteilungsöffnung
- 203: Erstes Ende des Luftverteilungskanals
- 204: Zweites Ende des Luftverteilungskanals
- 205: Gebläse
- 206: Luftsammelkanal
- 207: Sammelöffnung
- 208: Erstes Ende des Luftsammelkanals
- 209: Zweites Ende des Luftsammelkanals
- 210: Seitenwandung des Luftverteilungskanals
- 211: Seitenwandung des Luftsammelkanals
- 212: Steuereinrichtung
- 213: Druckmesseinrichtung
- 214: Zweite Luftausgangsöffnung des Luftsammelkanals
- 215: Abfuhr von Luft und/oder Abwärme
- 216: Zweite Vorrichtung zum Öffnen und/oder Schließen der zweiten Luftausgangsöffnung des Luftsammelkanals
- 217: Luftausgangsöffnung des Luftverteilungskanals
- 218: Abfuhr von Luft
- 219: Vorrichtung zum Öffnen und/oder Schließen der Luftausgangsöffnung des Luftverteilungskanals
- 220: Lufteingangsöffnung des Luftverteilungskanals
- 221: Zufuhr von Luft
- 222: Luftzufuhrkanal
- 223: Luftrezirkulationskanal
- 224: Erste Luftausgangsöffnung des Luftsammelkanals
- 225: Erste Vorrichtung zum Öffnen und/oder Schließen der ersten Luftausgangsöffnung des Luftsammelkanals
- 226: Zweitluftkanal
- 227: Dritte Luftausgangsöffnung des Luftsammelkanals
- 228: Eingangsseite des Zweitluftkanals
- 229: Dritte Vorrichtung zum Öffnen und/oder Schließen der dritten Luftausgangsöffnung des Luftsammelkanals
- 230: Ausgangsseite des Zweitluftkanals
- 231: Keine Abwärme-generierendes Modul
- 232: Vorrichtung zum Öffnen und/oder Schließen der Verteilungsöffnung (Motorgetriebe Klappe)
- 233: Vorrichtung zum Öffnen und/oder Schließen der Sammelöffnung (Rückschlagklappe)
- 234: Leitung
- 235: Gebläse
- 236: Fortluftabfuhr

- AUL: Außenluft
- FOL: Fortluft

## Patentansprüche

1. Modular aufgebautes Energiesystem (10) zur Gestaltung eines aus Einzelkomponenten aufgebauten Gesamtsystems, insbesondere eines Gebäudeenergiesystems,
wobei das Energiesystem (10) als eine erste Komponente eine Kurzzeitspeichereinrichtung (70) zur Speicherung elektrischer Energie aufweist,
wobei das Energiesystem (10) als eine zweite Komponente eine Langzeitspeichereinrichtung (80) zur Speicherung von Wasserstoff aufweist,
wobei das Energiesystem (10) als eine dritte Komponente eine Brennstoffzelleneinrichtung (30) aufweist, und
wobei das Energiesystem (10) als eine vierte Komponente eine Elektrolyseeinrichtung (40) aufweist, die zur Erzeugung von Wasserstoff bereitgestellt ist,
**dadurch gekennzeichnet,**
**dass** die Kurzzeitspeichereinrichtung (70) modular aufgebaut ist und eine Anzahl von N Energie-Speichermodulen (71) aufweist, die über Verbindungsstellen individuell gestaltbar zu der Kurzzeitspeichereinrichtung (70) zusammengesetzt oder zusammensetzbar sind, und dass die Langzeitspeichereinrichtung (80) modular aufgebaut ist und eine Anzahl von N Wasserstoff-Speichermodulen (82) aufweist, die über Verbindungsstellen individuell gestaltbar zu der Langzeitspeichereinrichtung (80) zusammengesetzt oder zusammensetzbar sind.

2. Energiesystem nach Anspruch 1, **dadurch gekennzeichnet, dass** das Energiesystem (10) einen Aufnahmeraum für die Kurzzeitspeichereinrichtung (70) aufweist oder bereitstellt, dass der Aufnahmeraum vorzugsweise als Schrankeinrichtung (72) oder Gehäuseeinrichtung ausgebildet ist und dass die Energie-Speichermodule (71) lösbar in dem Aufnahmeraum angeordnet sind, vorzugsweise werkzeuglos, mittels einer Steckverbindung, mittels einer Aufsteckverbindung oder mittels einer Einschubverbindung.

3. Energiesystem nach Anspruch 1 oder 2, **dadurch gekennzeichnet, dass** die Kurzzeitspeichereinrichtung (70) ein Managementmodul (73) aufweist, dass das Managementmodul (73) eine, insbesondere skalierbare, Leistungselektronik (74) aufweist oder als eine solche Leistungselektronik (74) ausgebildet ist, und dass die Energie-Speichermodule (71) lösbar mit dem Managementmodul (73) elektrisch gekoppelt oder verschaltet sind.

4. Energiesystem nach einem der Ansprüche 1 bis 3, **dadurch gekennzeichnet, dass** die Wasserstoff-Speichermodule (82) als Speicherbehälter, insbesondere als Druckbehälter, ausgebildet sind.

5. Energiesystem nach einem der Ansprüche 1 bis 4, **dadurch gekennzeichnet, dass** die Wasserstoff-Speichermodule (82) als Speicherbehälter mit einem darin befindlichen Speichermaterial ausgebildet sind.

6. Energiesystem nach einem der Ansprüche 1 bis 5, **dadurch gekennzeichnet, dass** die Langzeitspeichereinrichtung (80) wenigstens eine Anordnung aus jeweils einer oder mehreren Hochdruckspeichereinrichtung(en) (81) für Wasserstoff aufweist.

7. Energiesystem nach einem der Ansprüche 1 bis 6, **dadurch gekennzeichnet, dass** die Wasserstoff-Speichermodule (82) und/oder die Hochdruckspeichereinrichtung(en) (81) lösbar mit einer Verbindungseinrichtung (83) verbunden sind, welche insbesondere der Langzeitspeichereinrichtung (80) zugeordnet ist, dass die Verbindungseinrichtung (83) einen oder mehrere Anschluss/Anschlüsse für die Wasserstoff-Speichermodule (82) und/oder die Hochdruckspeichereinrichtung(en) (81) aufweist und dass die Verbindungseinrichtung (83) optional wenigstens eine Ventileinrichtung aufweist.

8. Energiesystem nach Anspruch 7, **dadurch gekennzeichnet, dass** die Wasserstoff-Speichermodule (82) und/oder die Hochdruckspeichereinrichtung(en) (81) mittels eines Verbindungselements (84) mit der Verbindungseinrichtung (83) verbunden sind, und dass das Verbindungselement (84) insbesondere als dauerhaft technisch dichtes Verbindungselement, als Schnellkupplungsverbindungselement, als Schraubverbindungselement, als Klemmringverbindungselement oder als konisches Rohrdichtungsverbindungselement ausgebildet ist.

9. Energiesystem nach einem der Ansprüche 1 bis 8, **dadurch gekennzeichnet, dass** die Langzeitspeichereinrichtung (82) wenigstens eine Einrichtung zur Druckmessung und/oder wenigstens eine Einrichtung (85) zur Dichtigkeitsmessung in den Wasserstoff-Speichermodulen (82) und/oder in den Hochdruckspeichereinrichtung(en) (81) und/oder in der Verbindungseinrichtung (83) und/oder in den Verbindungselementen (84) und/oder in der Ventileinrichtung aufweist.

10. Energiesystem nach einem der Ansprüche 1 bis 9, **dadurch gekennzeichnet, dass** die Brennstoffzelleeinrichtung (30) modular aufgebaut ist und eine Anzahl von N Brennstoffzellenmodulen (31) aufweist, die über Verbindungsstellen individuell gestaltbar zu der Brennstoffzelleneinrichtung (30) zusammengesetzt oder zusammensetzbar sind, und/oder dass die Elektrolyseeinrichtung (40) modular aufgebaut ist und eine Anzahl von N Elektrolysemodulen (41) aufweist, die über Verbindungsstellen individuell gestaltbar zu der Elektrolyseeinrichtung (40) zusammengesetzt oder zusammensetzbar sind.

11. Energiesystem nach einem der Ansprüche 1 bis 10, **dadurch gekennzeichnet, dass** das Energiesystem (10) ein Lüftungssystem (200) zur Bereitstellung von Luft und/oder Abwärme für das Energiesystem (10) aufweist, mit:
einem Luftverteilungskanal (201), wobei der Luftverteilungskanal (201) wenigstens eine, vorzugsweise zwei oder mehr, insbesondere verschließbare, Verteilungsöffnungen (202) aufweist, wobei jeweils eine Verteilungsöffnung (202) als strömungstechnische Schnittstelle zur Eingangsseite der Brennstoffzelleneinrichtung (30) und der Elektrolyseeinrichtung (40) ausgebildet ist, wobei der Luftverteilungskanal (201) ein erstes Ende (203) und ein dem ersten Ende (203) gegenüberliegendes zweites Ende (204) aufweist, wobei die wenigstens eine Verteilungsöffnung (202) zwischen dem ersten Ende (203) und dem zweiten Ende (204) im Luftverteilungskanal (201) ausgebildet ist,
weiterhin mit einem Luftsammelkanal (206), wobei der Luftsammelkanal (206) wenigstens eine, vorzugsweise zwei oder mehr, insbesondere verschließbare, Sammelöffnungen (207) aufweist, wobei jeweils eine Sammelöffnung (207) als strömungstechnische Schnittstelle zur Ausgangsseite der Brennstoffzelleneinrichtung (30) und der Elektrolyseeinrichtung (40) ausgebildet ist, wobei der Luftsammelkanal (206) ein erstes Ende (208) und ein dem ersten Ende (208) gegenüberliegendes zweites Ende (209) aufweist, und wobei die wenigstens eine Sammelöffnung (207) zwischen dem ersten Ende (208) und dem zweiten Ende (209) im Luftsammelkanal (206) ausgebildet ist, sowie weiterhin mit wenigstens einem Gebläse (105), welches in dem Luftverteilungskanal (101) angeordnet ist oder dem Luftverteilungskanal (101) zugeordnet ist, und/oder wenigstens einem Gebläse, welches in dem Luftsammelkanal (106) angeordnet ist oder dem Luftsammelkanal (106) zugeordnet ist.

12. Energiesystem nach einem der Ansprüche 1 bis 11, **dadurch gekennzeichnet, dass** das Energiesystem (10) eine Steuereinrichtung (60) insbesondere mit einer Rechnereinrichtung (60a), zur Steuerung der einzelnen Komponenten des Energiesystems (10) und/oder zur Erfassung und/oder Erzeugung und/oder Verarbeitung von Betriebsdaten der einzelnen Komponenten des Energiesystems (10), insbesondere der einzelnen Module des Energiesystems (10), und/oder zum Erzeugen von Konfigurationsdaten für die einzelnen Komponenten des Energiesystems (10), insbesondere der einzelnen Module der Komponenten des Energiesystems (10), anhand der Betriebsdaten, aufweist.

13. Energiesystem nach Anspruch 12, **dadurch gekennzeichnet, dass** die Steuereinrichtung (60) eine Eingabeeinrichtung zur Eingabe von Daten oder eine Schnittstelle zu einer Eingabeeinrichtung zur Eingabe von Daten aufweist, und/oder dass die Steuereinrichtung (60) eine Ausgabeeinrichtung zur Ausgabe von Daten oder eine Schnittstelle zu einer Ausgabeeinrichtung zur Ausgabe von Daten aufweist.

14. Verfahren zum Konfigurieren eines modular aufgebauten Energiesystems (10) gemäß einem der Ansprüche 1 bis 13, **gekennzeichnet durch** folgende Schritte:
a) In einer Rechnereinrichtung (60a) des Energiesystems (10), Erfassen und/oder Erzeugen und/oder Verarbeiten von Betriebsdaten zumindest einzelner Komponenten des Energiesystems (10), insbesondere der einzelnen Module der Komponenten des Energiesystems (10);
b) In der Rechnereinrichtung (60a), Erzeugen von Konfigurationsdaten für die zumindest einzelnen Komponenten des Energiesystems (10), insbesondere der einzelnen Module der Komponenten des Energiesystems (10), anhand der Betriebsdaten;
c) Über die Rechnereinrichtung (60a), Bereitstellen der Konfigurationsdaten einem Nutzer des Energiesystems (10), insbesondere über eine Ausgabeeinrichtung.

15. Verfahren nach Anspruch 14, weiterhin **gekennzeichnet durch** folgenden Schritt: d) In der Rechnereinrichtung (60a), Empfangen von Anpassungsdaten für das Energiesystem (10) und Erzeugen der Konfigurationsdaten in Schritt b) unter Berücksichtigung der Anpassungsdaten.
